# EUROPEAN PATENT SPECIFICATION

(11) **EP 3 784 594 B1**
(45) Date of publication and mention of the grant of the patent: **03.04.2024**
(21) Application number: 18733667.2
(22) Date of filing: 25.04.2018
(51) Int. Cl.: B65D 81/32

(54) **MULTIPLE COMPARTMENT CONTAINER HAVING AN INTERFACE DEVICE FOR MIXING CONTENTS AND METHOD TO PRODUCE SUCH CONTAINER**
MEHRKAMMERBEHÄLTER MIT EINER SCHNITTSTELLENVORRICHTUNG ZUM MISCHEN VON INHALTEN UND VERFAHREN ZUR HERSTELLUNG SOLCH EINES BEHÄLTERS
MULTIPLE COMPARTMENT CONTAINER HAVING AN INTERFACE DEVICE FOR MIXING CONTENTS AND METHOD TO PRODUCE SUCH CONTAINER

(43) Date of publication of application: 03.03.2021
(73) Proprietor: Compagnie Gervais Danone, 75009 Paris (FR)
(72) Inventor: JARAMILLO, Juan-Felipe, 76016 Paris (FR); ORCHARD, Alex James, 78110 Le Vesinet (FR)
(74) Representative: Plasseraud IP
(86) International application number: PCT/IB2018/000582
(87) International publication number: WO 2019/207332

(56) References cited:
- EP-A1- 0 475 789
- WO-A1-96/21601
- FR-A- 1 171 388
- FR-A1- 3 022 896
- US-A- 5 944 207

## Description

### FIELD OF THE INVENTION

The present invention generally relates to containers used in packaging industry, particularly to plastic containers that separately hold two components of a product until a consumer manipulates the container to cause mixing of the components, the consumer thus obtaining a ready-to-use product, such as a ready-to-eat or ready-to-drink food or beverage product.

### BACKGROUND OF THE INVENTION

Upon serving, many food products comprise a liquid phase wherein solid particulate matter is mixed or suspended. In the preparation of such foods, the particulate solids are added to the liquid phase shortly before or at the moment of serving. In many cases it is impossible to maintain the desired organoleptic and texture properties of these foods when the solid component and the liquid component are mixed prior to prolonged storage. For instance, when breakfast cereals are combined with milk a substantial period of time before serving, their texture and mouthfeel change. In consequence, the respective components of such foods are typically separately packaged and distributed and it is left to the consumer to combine them as part of the preparation of a meal.

On the other hand, there is a growing demand for tasteful, convenient food products suitable for on-the-go consumption. More generally, multiple compartment containers are of high interest to provide new convenient use. However multiple compartment containers require many handling operations, such as opening several containers, pouring the content(s), mixing the content etc.

Furthermore, they generate several parts, for example several closures and/or several containers, that are to be discarded for example in a bin. This is not convenient and there is a risk that some part be not correctly discarded and end in a street or public transportation. Accordingly, there is an interest in having containers that cannot be split into several disposable parts. It is more convenient when having a packaging that remains a single compact entity, preferably without separate pack element (like a lid or pull strap) after activation of the mixing.

A dedicated packaging, allowing the separate storage and distribution of two components of a food product in a single package until the moment of consumption, is known from document WO 2012/160117 A1. A multiple compartment injected container is provided to permit the consumption of the food while holding the container with a single hand and with a minimal risk of spilling, even when the consumer performs other activities such as walking, running, travelling, cycling, or driving. Product components are hermetically sealed in their respective container sections and are separate before activation. Upon activation, by moving the container top section relative to the container bottom section, one component can be mixed with the other within the internal volume of both container sections.

When consuming the mixture, there is no need to dislodging any one of the compartments from one another. The consumer only makes a simple gesture to actuate the mixing operation (no need to combine several steps). An internal passage for allowing the mixing is released by puncturing a relatively flexible intercompartment membrane. A twist actuation may be performed to cause advance of the piercing means.

In general, the implementation of the industrial production of containers requires that their manufacture relies as much as possible on procedures and components that are standard in the food, beverage and packaging industries, thus lowering the cost and complexity of production.

However, the injected parts of the container described in WO 2012/160117 A1 are complex, and expensive to produce. Moreover, they do not allow a significant range of shapes. In particular, it is difficult to provide a significant volume when injecting an internal housing (for example internal housing in a cap). Containers thus become expansive to produce.

The compartments can only be obtained by injection molding in the solution of WO 2012/160117 A1, as high accuracy of the fastening structures, which are complex, is required. Moreover, the outer shape of the container cannot significantly vary. The side wall must have a flared shape, typically a substantially truncated cone shape (see Figs 49-50 of WO 2012/160117 A1) for removing the respective container parts from a mold. In other words, there is a need for containers that comply with mass production requirements, without strong limitations regarding the technology used to form the outer side wall of the container, and preferably without limitation regarding the design of the outer wall, without limitation regarding the volume of either container (unlike many options which are limited by the injected molded cap dimensions and demolding needs).

Document EP0475789 A1 discloses a two-compartment device, having a lower glass container, a stationary coupling mounted around a plastic collar on the glass container neck, an upper bottle, and a separating membrane between the compartments formed by the lower container and the upper bottle. A perforator assembly is secured to the bottle and displaced for perforating the membrane.

Accordingly, there is an interest for producing multiple compartment containers well adapted to be produced by efficient industrial processes and with various shapes, offering efficient sealing before and after actuation of the mixing (so that the overall container can be resealed mid-use in some options), while providing ease of handling for the users.

### SUMMARY OF THE INVENTION

The purpose of the present invention is to provide multiple compartment containers addressing one or more of the above mentioned problems.

To this end, embodiments of the present invention provide a container for keeping contents in separate compartments before use, the container comprising:
- a first container body providing a first compartment for containing a first content, the first container body having an end and a first outer side wall extending around the first compartment;
- a second container body separate from the first container body, the second container body providing a second compartment for containing a second content, the second container body having a second outer side wall extending around the second compartment, and an end opposite to the end of the first container body (the first outer side wall and the second outer side wall being typically separate sections of an outer sidewall of the container);
- an interface device, separate from the first container body and separate from the second container body, for connecting the first container body to the second container body (the interface device being a coupling device that typically extends axially from an open/annular end of the first container body to an open/annular end of the second container body);
- an internal passage, allowing communication between the first compartment and the second compartment;
- a closure member sealing the internal passage, the closure member comprising an intercompartment membrane separating the first compartment from the second compartment;

wherein the interface device comprises a first connector and a second connector each of annular shape and engaged with each other to provide a connection (optionally a fluid tight connection) between the first compartment and the second compartment,
wherein the first connector comprises a ring part fastened to an annular end of the first container body, the second connector being fastened to an annular end of the second container body and being provided with opening means (for example a puncturing structure),
and wherein the opening means of the second connector is movable relative to the first connector, so as to move between a position distal from the internal passage sealed by the closure member and an activated position to open/release the internal passage by opening the intercompartment membrane, allowing mixing between the first content and the second content (the mixing being performed, for instance, in a superimposed configuration of the first container body and the second container body). According to the invention, the second connector comprises a retaining element, the first connector being provided with a detent element configured to engage with the retaining element so as to prevent the second connector from being detached from the first connector.

The opening means is typically a puncturing structure, the opening being done by puncturing the intercompartment membrane.

The container enables in a simple convenient gesture to break a separation, typically a seal membrane between two container bodies or similar hermetic seal between two containers.

The arrangement of the container with the interface device is compatible with requirements of mass production, while offering a wide choice for geometry for the first container body and the second container body.

Thanks to the interface device coupling the two container bodies, there is no specific constraint on the type of container sections that can be connected. Hence, the container can be more cost-effective than e.g. solution with injection molded container sections including the coupling features.

Additionally the usage generates a limited number of separated elements to be each discarded, helping thus keeping clean the vicinity of the usage.

Any kind of content, preferably flowable content, may be used to form the two initially separate components. The components are not necessarily food components or pharmaceutical/cosmetics components. In some embodiments, at least one of the two contents may be chosen amongst flowable construction materials (concrete glues, polyurethane components) or in chemistry field.

One of the two components may be a dairy component. Preferably, one of the components has greater density than the other component and/or is not in same physical state (for example one component is solid while the other component is liquid).

After use, the container is designed to be recyclable, the side wall section being for instance made of same thermoplastic material.

The container can typically have an outer sidewall extending between two opposite ends: one end being the first end of the first container body and the other end being the opposite end/second end of the second container body.

Such outer sidewall is continuous, the interface device optionally forming an intermediary part of the outer sidewall (directly between the first container body and the second container body).

The two container bodies can be formed simultaneously, by a blow trimming technology and their annular ends are formed with an interior flange. More generally, the container bodies may be blown pieces and/or formed in cost-effective manner (typically with higher production rate and/or with greater saving of plastic material). For instance, the first container body and the second container body may be part of a same bottle, preferably a blown bottle, used as a pre-container. Such method makes it possible to produce particularly inexpensive packaging containers, while at the same time adhering to the hygiene standards necessary for food products. The size and shape of the first and second container bodies may greatly vary as limitations encountered for injection molding do not exist in blowing technology.

In a preferred embodiment, the mutually facing annular ends of the container bodies are open ends of same size and shape, so that the container may have a regular/balanced sidewall.

At least the side wall of the first container body may be of same cross-section as the outer face of the fastening flanges that belong to the interface device. For instance, a cylindrical shape is provided in the first container body at least in a portion adjacent to the interface device. More generally, the container may be deprived from any outer bulge formed at the interface device or adjacent to the interface device, whereby the outer aspect of the container is perceived as regular at location of the interface device, without abrupt change of section.

The interface device acts as a coupling device to allow a predetermined movement of the second connector (for instance a male connector when including an inserting part) relative to the first connector (female connector when including a bearing portion receiving and guiding the inserting part of the second connector). Such predetermined movement, for instance a simple twist action, typically a quarter turn (or less than a half turn), causes release of the internal passage as the membrane is pierced by the puncturing structure. The movement is "predetermined" as there is one or more guide elements and/or one retaining element that prevent the inserting part of one of the connector to detach from the bearing portion of the other connector, whereby the mating of these connectors only allows for a determined relative movement, preferably a twist movement with reduction of the total height of the interface device as measured from one axial end to the other axial end of the interface device.

Each connector may be provided with a mechanism portion and a fastening flange portion, the mechanism portion being of different cross-section (for instance of reduced cross-section) as compared to the fasting flange portion. This may be of interest, in order to optimize capacity of each container body.

Optionally, the container comprises an elongated tamper-evidence element having two opposite edges (circumferential edges) each connected to the interface device, one of the two opposite edges being connected to the first connector and the other one of the two opposite edges being connected to the second connector (each of the opposite edges may be connected to a respective one of the connectors via integral bridge elements that are frangible).

Optionally, the container comprises discontinuous tamper-evidence elements or a band discontinuously attached to at least one of the connectors of the interface device.

An annular outer recess may extend between two opposite shoulders formed by the respective fastening flange portion, and a removable overlapping element may cover the annular outer recess, by circumferentially extending around the mechanism portions and being selectively attached to the first connector and the second connector, typically without any attachment to the container bodies. The movement permitted by the mechanism may be blocked by the removable overlapping element before use, while advantageously using container bodies without relief in the body side wall for attachment to such overlapping element. A frangible connection is provided, respectively between the first connector and the overlapping element, and between the second connector and the overlapping element and, preferably, the overlapping element defines a tamper-evidence element.

According to a particular, the intercompartment membrane (intermediate seal between the compartments) is displaced to be out of the way of the flow between both container sections.

According to a particular, at least part of the second compartment, secured rotationally to the second connector, can be moved relative to the first compartment to displace the puncturing structure toward the activated position.

Typically, the closure member is connected to a circumferential attachment surface of the first container body, preferably adjacent to a free annular end of the first container body so as to extend in between the two adjacent compartments.

After causing the puncturing of the intercompartment membrane, the container is designed to be shaken/mixed and then dispensed. The first compartment and the second compartment may be complementary sub-volumes of a whole interior volume of the container.

The puncturing structure comprises a plurality of piercing members and is rotationally integral to the second container body. The distal position is an initial position of the puncturing structure, possibly axially spaced from less than 4 or 5 mm from the membrane of the closure member.

According to a particular, the puncturing structure is so designed and oriented with respect to the membrane that movement in a first direction, of the second connector, relative to the first connector, causes a movement in this first direction of the piercing members such that the piercing members can partially pierce the membrane, while a connection is maintained between the closure member (that includes the pierced membrane) and a portion of the circumferential attachment surface.

Optionally, the movement of the second connector may be actuated by grasping the container at the second outer side wall formed by the second container body, possibly by rotating/twisting in opposite directions the first container body and the second container body.

In a preferred embodiment, a rotation of the first container body relative to the second container body, around a central axis of the internal passage, is selectively permitted by relative predetermined movement between the first connector and the second connector, due to a non-rotatable fastening:
- between the first container body and the ring part of the first connector on the one hand; and
- between the second container body and a fitment part of the second connector on the other hand.

According to a particular, the interface device acts as a coupling device to allow a predetermined movement of the second connector relative to the first connector, such predetermined movement including an axial movement (downward or upward movement) of the puncturing structure, which causes the traversal of at least part of piercing members of the puncturing structure beyond a virtual plane defined by the membrane in its initial state before piercing/puncturing.

After the membrane is pierced, it can be folded downwardly, due to the weight of content placed above the membrane, when the first compartment and the second compartment are in a superimposed configuration. Typically, the actuation movement may be a rotation around the central axis and the interface device may be provided with one or more cam surfaces to axially guide the puncturing structure, causing the puncturing of the membrane.

In the folded state, at least part of the pierced membrane may extend between the puncturing structure and a wall delimiting the first compartment.

Further, it is preferred that the intercompartment membrane, connected in between said compartments before actuation, is substantially perpendicular to a longitudinal axis of the container that forms a central axis of the interface device (that is of annular shape).

Optionally, the first connector of the interface device is a single piece made of thermoplastic material, for instance an injection molded piece.

Optionally, the second connector of the interface device is a single piece made of thermoplastic material, for instance an injection molded piece.

The second connector comprises, separately from the first container body and from the second container body, a circumferential row of sharp-edged piercing members at its annular edge opposite to an axial end of the interface device. Preferably, rotating movement of the second container relative to the first container causes a predetermined movement of the second connector toward the first compartment, with a movement of the piercing means such that the edge of the circumferential piercing members pierces the intercompartment membrane along a partially circumferential piercing path.

More generally, it is understood that a connection can maintained between the pierced membrane and the container through a non-pierced segment of the membrane that remains integral with an annular margin portion of the closure member.

In various embodiments of the container of the invention, recourse may optionally also be had to one or more of the following dispositions:
- the annular end of the first container body is in contact with a first sealing element, which is made separate from the first connector.
- the first sealing element is in annular contact with the ring part of the first connector.
- the ring part of the first connector may extend around the closure member or, more generally, the plane of the closure member may intersect the interface device.
- the first sealing element provides a rigid connection between the first container body and the first connector, so that the first connector is tightly fastened to the annular end of the first container body.
- the first sealing element provides an annular sealing contact between the first connector and the first container body.
- the first sealing element is an annular part of the closure member.
- the container comprises an electrically conducting layer (which can be included in the first sealing element), typically a metal layer, and preferably a layer containing aluminum, adjacent to an annular contact area for contact between the first sealing element and the first connector of the interface device, the first connector being induction sealed to the first container body at the annular contact area.
- the annular end of the second container body is in contact with a second sealing element, which is separate from the second connector and in annular contact with the second connector.
- the second sealing element provides a rigid connection between the second container body and the second connector so that the second connector is tightly fastened to the annular end of the second container body.
- the second sealing element provides an annular sealing contact between the second connector and the second container body.
- the second sealing element extends annularly around a sub-area of the second compartment and is received in an annular inner groove of the second connector.
- the second sealing element comprises an electrically conducting layer, typically a metal layer, and preferably a layer containing aluminum, adjacent to a determined annular contact area for contact between the second sealing element and the second connector of the interface device, the second connector being induction sealed to the second container body at the determined annular contact area.
- the first connector and the second connector of the interface device form each a single piece of plastic more rigid that any one of the container bodies. They can be injection molded pieces of thermoplastic material, for example chosen in any one of the following groups:
   - Polyolefines, including but not exhaustive: hdPE, IdPE, IIdPE, PP, PP copo random, or a mix of them;
   - Polyesters: such as PET, PLA, PETg;
   - Polycarbonate, PVC, PS.
- optionally, the first connector and the second connector of the interface device are each made of thermoplastic material (typically without any mineral foil).
- the interface device comprise at least two parts or pieces and is provided with an annular recess.
- the interface device can be activated by a twist movement to have a final height of the interface device, which is decreased as compared to initial height.
- preferably, the interface device is provided with an annular recess, formed circumferentially between the connectors, such annular recess having a height decreased when activating the puncturing, with provision that this height remains superior to 2 or 3 mm, preferably superior to 4 or 5 mm (with such arrangement, the skin of the consumer's hand cannot be pinched).
- the first container body and the second container body are each made of thermoplastic (typically without any mineral foil).
- the container may be provided with:
   - a first sealing element interconnecting in fluid tight manner the ring part and the first container body, the first sealing element comprising an electrically conducting mineral layer, preferably an aluminum foil, to form a non-rotatable induction sealing contact between the first connector and the first container body with respect to each other;
   - a second sealing element interconnecting in fluid tight manner the fitment part and the second container body, the second sealing element comprising an electrically conducting mineral layer, preferably an aluminum foil, to form a non-rotatable induction sealing contact between the second connector and the second container body with respect to each other.
- the second connector is a male connector provided with an inserting part of tubular shape.
- the inserting part is fitted in the first connector that is a female connector, and is in annular sealing contact with an inner face of the first connector in a circumferential contact area.
- the inserting part is provided with guide elements formed on an outer face of the inserting part (the guide elements being reliefs, for instance outer protrusions).
- the guide elements comprise at least two spaced (circumferentially spaced) guide elements.
- the at least two circumferentially spaced guide elements cooperate with coupling means formed on the inner face of the first connector.the inserting part comprises a cylindrical protecting portion that at least partly covers the coupling means and extends axially from the circumferential contact area to an annular free edge of the inserting part; the annular free edge is typically axially shifted from the guide elements.
- the guide elements are axially closer from the circumferential contact area than from the annular free edge (with such arrangement, the mechanism part is protected from accumulation of powdered parts of a solid content in the coupling area, when solid content is placed inside the interface device; movement of the second connector relative to the first connector can be operated effortlessly).
- optionally, the cylindrical protection portion entirely covers the couplings means to prevent radial contact, at least before the puncturing, between a content (typically a content in the second compartment) and the coupling means.
- the coupling means may include one or more grooves, preferably grooves that are arranged discontinuously in the inner face of the first connector.
- the guide elements comprise one or more threads, allowing a screwing (a good fluid tight contact can be obtained when having such kind of connection between the connectors).
- the second connectors is of a screw-on type relative to the first connector and there is an abutment element to limit rotation between the connectors, the angle of the full rotation movement being adjusted from 10-270 degrees, and preferably being less than 100 degrees and more than 70 or 80 degrees.
- the container has a single opening, preferably of lower size than the internal passage.

If the opening and the internal passage are of circular section, the diameter of the internal passage may optionally represent between 110 and 400%, preferably between 130 and 270%, of the diameter of the single opening.
- the container opening is formed at an axial end of the container, and may be arranged in a neck, typically a threaded neck.
- a typically rigid cap and/or flexible lid is provided to close the container opening.
- the cap may be essentially made of thermoplastic material, typically chosen in the group of polyolefines, which includes (but not hexaustive) hdPE, IdPE, IldPE, PP, PP copo random, or a mix of them, or in the group of polyesters, such as PET, PLA, PETg Polycarbonate, PVC.
- at least one of the first container body and the second container body is a single-piece of thermoplastic material and/or a blow molded part, preferably cut from a pre-container.
- the interface device includes an outer part that separates, in the outer side wall of the container, the first outer side wall from the second outer side wall.
- the first connector comprises an annular bearing portion, axially protruding toward the second container body from an annular radial portion of the ring part.
- the annular bearing portion is configured to guide movement of the second connector.
- the second connector axially abuts against an axial end, formed at a rim of the annular bearing portion, to limit axial displacement of the puncturing structure.

According to a particular, the interface device comprises at least one guide element formed on the second connector and an inner face of the first connector, which is provided with at least one helical cam engaging with the at least one guide element so that the second connector is movable in translation combined with rotation.

According to the invention, the second connector comprises a retaining element, the first connector (typically the inner face or an outer face of the first connector) being provided with a detent element configured to engage with the retaining element so as to prevent the second connector from being detached from the first connector.

The detent element may optionally be formed by one or more of the guide elements.

One or more detent elements may each form an abutment surface to prevent, before actuation, the one or more guide elements from sliding in a direction opposite/away from the first connector, for instance when the guide elements are external projections or lugs formed on the second connector. With such arrangement, the interface device cannot be uncoupled and maximal height of the interface device remains inferior to cumulated heights of the first and second connectors. In variants, retaining elements distinct from the guide elements may cooperate with the one or more detent elements to prevent uncloupling.

According to a particular feature, the interface device comprises a locking element distinct from the retaining element and from the detent element and which is capable of engaging with one among said retaining element and said detent element so as to rotationally lock said activated position.

Preferably, the locking element may act as blocking means, which prevent, in the activated position, a movement in a second axial direction, opposite to the first axial direction, of the second connector relative to the first connector. As a result, after actuation, the puncturing structure in maintained in a position providing confinement of at least part of the pierced membrane between the puncturing structure and a wall delimiting the first compartment.

According to a particular feature, the first connector comprises:
- an annular bearing portion, axially protruding toward the second container body from an annular radial portion of the ring part, the annular bearing portion comprising an inner guiding face for guiding movement of the second connector;
- an annular inner groove for receiving an annular margin portion of the closure member and the annular end of the first container body, at the opposite from the annular bearing portion (the inner groove may be axially open and included in the ring part).

More generally, the first connector may be provided with any kind of appropriate inner guiding face, which provides a radial contact for guiding rotation of the second connector, so that clockwise or counter-clockwise rotation of the second connector (together with the second container body) may be actuated by one user's hand when the first connector and the first container body are firmly grasped stationary in the other hand.

According to a particular, the second connector is in radial annular contact with the inner guiding face, using at least one circumferential flexible lip included in the interface device.

According to a particular, the at least one circumferential flexible lip comprises an annular lip provided in the first connector and configured to interact with a free end of the second connector, preferably by a radial annular contact, so as to ensure air tightness between the first compartment and the inner guiding face (thus typically ensuring air tightness around the internal passage), after the intercompartment membrane is open (typically punctured). Before actuation, such annular lip may be an inner lip protruding radially inwards relative to the inner guiding face included in the annular bearing portion of the first connector.

According to a particular, the at least one circumferential flexible lip comprises and annular outer lip provided in the second connector and configured to interact with an inner guiding face of the first connector, so as to form a barrier contact around the second compartment (possibly liquid or air tightness between the second compartment and the inner guiding face), at least before the intercompartment membrane is punctured.

The two contents are capable of being mixed together in a quick and easy fashion immediately prior to consumption for complete freshness. Such mixing can be performed for two or more product components, at the point of use in a portable affordable pack system.

Typically, the container is provided with a pouring opening or any kind of suitable opening, typically at an end of the container away from the coupling element formed by the interface device. With such arrangement, the container also permits opening of the container (for instance at the opposite from a container bottom), for consumption of a first content from the container, and subsequent manipulation of the container to mix or release a second content for consumption from the container. Indeed, a consumer could desire to have a mixture with a higher proportion of the first content and separately retrieve an unmixed part of the second content (or vice versa).

In various embodiments of the container of the invention, the hollow bodies used to form the first container body and the second container body may be provided with one or more of the following features:
- the mutually facing annular ends of the container bodies are threadless (indeed, there is no need for removable connection with respect to the connectors of the interface device).
- each container body is made of a plastic material more flexible than plastic of the interface device and/or has a maximum thickness in a flexible part of the side wall (for instance substantially in the middle of the corresponding body) which is inferior to a minimum thickness of the interface device measured between an inner face and an outer face of the interface device, apart from the puncturing structure.
- the annular side wall of each container body defines a single annular side wall of the hollow body and is formed by a single layer of plastic material.
- one or each of the container bodies is a blow molded piece made of a material chosen in the group of Polyesters, such as PET, PLA, PETg.
- one or each of the container bodies is a blow molded piece made of a material chosen in the group of Polyolefines, including but not exhaustive: hdPE, IdPE, IldPE, PP, PP copo random, or a mix of them.
- one or each of the container bodies is a blow molded piece made of Polycarbonate, PVC, PS Mix of one of the here above plastics.
- at least one of the container bodies includes or is made of Paper, Aluminum, Metal (steel), Glass, Paper/PE multilayer structure.

When including blow molded bodies, it is understood that the container side wall can be of lighter weight as compared to a side wall of an injection molded plastic. The container bodies may be obtained with lower cost related to the plastic material in the one hand, and with lower environmental footprint on the other end.

According to a particular, the side wall of any hollow body amongst the first container body and the second container body has an average thickness typically similar to the average thickness in the top flange, for example with a difference in thickness less than 50 µm.

Preferably there is a difference in thickness, for instance lower than 15 or 20 %, due to an increase in thickness in the part of the top flange that is heat sealed and in contact with the closure member.

An average thickness may be calculated in a known manner, without compressing the plastic material and by measuring in a plurality or regularly spaced locations (typically with at least five measurements). For this purpose, the top flange may be optionally cut.

Of course, in the instant specification, the term "annular" should not be here interpreted in any strict manner, provided that the corresponding shape defines a ring-like closed section, typically around a central axis. This does not exclude any straight segments as perceived in cross section and polygonal shapes or partly polygonal shapes may be interpreted as annular shapes in such context.

But, in a preferred embodiment, the annular end of each container body delimits a generally circular opening or strictly circular opening (without any straight segment), and the outer rim of the flange in each container body may be generally circular.

According to a particular feature, the first container body, the second container body, the interface device, the cap or lid have their respective inner faces each defined by a material suitable for food contact. The sealing elements containing an electrically conducting foil (metal foil, preferably an aluminium foil) may also have such material suitable for food contact, at least in a face at the opposite from the interface device.

It is also provided a method for producing a container of the invention, of the type having a first container body and a second container body operatively coupled to the first container body via an interface device that includes a first connector and a second connector, the method comprising:
- fastening the first container body to one of two opposite axial ends of the interface device, preferably by induction sealing using a first metal medium included in or adjacent to a first fastening junction between the first connector and the first container body;
- filling the first container body with the first content, in order to store the first content in the first compartment;
- fastening the second container body to the other one of two opposite axial ends of the interface device, preferably by induction sealing using a second metal medium included in or adjacent to a second fastening junction between the second connector and the second container body;
- filling the second container body with the second content, in order to store the second content in the second compartment separately from the first content thanks to an intercompartment membrane included in the closure member that is attached to one amongst the first connector and the second connector to seal the internal passage provided for communication between the first compartment and the second compartment;
- closing the container to seal an opening forming an outlet for one amongst the first compartment and the second compartment;

wherein the first connector and the second connector provided with the opening means (preferably a puncturing structure) are connected (at a connection step) and coupled in a first configuration, in which a circumferential contact area (forming a sealing contact, typically a radial contact) extends continuously between the first connector and the second connector and the opening means is distal from the internal passage sealed by the closure member,
and wherein the second connector is engaged with coupling means of the second connector permitting a relative movement of the second connector relative to the first connector from the first configuration to a second configuration, in which the opening means opens the internal passage by puncturing and/or displacing the intercompartment membrane. The second connector is prevented from being detached from the first connector due to engagement between a retaining element provided in the second connector and a detent element provided in the first connector.

Using such a method, activation of the mixing is permitted by a robust coupling structure, produced separately from the container bodies. With induction sealing, the container remains integer after the activation and accidental leakages at the fastening junctions of the container bodies with the interface is prevented (the junctions may be air-tight junctions when tightly fastening the respective container bodies). Additionally, the bulk for the mechanism part may be easily reduced without limiting options regarding cross-section and general shape of the container bodies.

According to a particular, the closure member is placed between the annular end (open end) of the first container body and the ring part (fastening part) of the first connector, when forming the first fastening junction.

Optionally, the induction sealing is performed using at least one annular induction sealing head through which all or part of the container is passed, so that at least one induction seal gasket including a metal medium is activated.

According to a particular, the preparing of the two container bodies comprises the following steps:
- forming by use of plastic material a pre-container extending along a central axis, so as to define two hollow body sections, each defining at least one side wall extending around the central axis, one of the section being provided with an opened end, and
- cutting the pre-container away from the opened end, in a direction transverse to the central axis, to form annular ends of identical or similar size and shape for each of the two container bodies.

Optionally, the following steps may be performed:
- forming by blowing plastic material the pre-container extending along a central axis, so as to define an opened pre-container having a pre-container sidewall that extends around the central axis, such sidewall being provided with a circumferential groove intersected by a virtual plane perpendicular to the central axis,
- cutting the pre-container so that an opened pre-container top section forms all or part of the first container body that is provided with a top opening and a pre-container lower section forms the second container body, the cutting being performed transversally to the central axis, at said circumferential groove, so as to form an open end of the first container body and an open end of the second container body that are distinct from the top opening, each open end being delimited by an annular inner rim of a flange, typically an interior flange.

According to a particular, the flange of the first container body is a flange initially angled that is pressed by the first connector when fastened to the first connector, so that the flange of the first container body is more flat in a sealed configuration of the first container body than in an initial configuration of the first container body, and/or the flange of the second container body is a flange initially angled that is pressed by the second connector when fastened to the second connector, so that the flange of the second container body is more flat in a sealed configuration of the second container body than in an initial configuration of the second container body.

Typically, the container bodies are deprived from any protruding outer flange.

In food industry as in other fields, plastic containers can often be stacked on top of one another so as to form stacks which can be layered on a pallet. When having a container with regular outer section, without any outer flange protruding outwardly as compared to the annular side wall of any one of the container bodies, a pallet may contain more containers as interspace between the containers may be reduced.

At least one section of the side wall of the container can be transparent or translucid. Preferably, the first container body and the second container body are each transparent and/or made of same thermoplastic material. Alternatively, the plastic material may be heterogenic, with a difference between the material of the first container body and the material of the second container body.

Advantageously, a pre-container is formed as a single bottle-like piece and then trimmed to obtain the hollow body. Preferably, the pre-container may be obtained by blow molding, optionally using a hollow preform of plastic material, so as to define a hollow pre-container of tubular shape extending between the bottom and the opened section.

The cutting step is performed to form an interior flange around each wide opening produced in the facing annular ends; the cutting step may be performed transversally to the central axis, so that each interior flange is of annular shape and provided with a same angle relative to a virtual plane perpendicular to the central axis. Such angle is for instance comprised between 5 and 20°, preferably around 15° before assembling the interface device and the container bodies.

It is understood that each interior flange of annular shape may be used to define a rest area where:
- an annular margin portion of a corresponding flexible lid forming the closure member (or similar sealing element integral with the closure member) is affixed, producing a continuous annular sealing contact, for instance by heat sealing or induction sealing; or
- an annular sealing gasket or similar sealing element is affixed, such sealing element allowing to integrally secure the interface device to one of the container bodies.

In various embodiments of the method of the invention, recourse may optionally also be had to one or more of the following dispositions:
- the pre-container is formed by a blow molding technology.
- a hollow preform is stretch-blow molded to obtain the pre-container.
- an Extrusion Blow Molding technology is used to form the pre-container.

Other features and advantages of the invention will become apparent to those skilled in the art during the description which will follow, given by way of a non-limiting example, with reference to the appended drawings.

### BRIEF DESCRIPTION OF THE DRAWINGS

Fig. 1 is an exploded parts illustration of a multiple compartment container in an embodiment in accordance with the invention;
Fig. 2 is a perspective view showing a part of the interface device, forming a second connector and provided with a puncturing structure;
Fig. 3 is a cut-away view showing the second connector of Fig. 2 and a gasket forming a sealing element for rigid connection to the second container body;
Fig. 4 is a perspective view showing another part of the interface device, forming a first connector provided with a ring part for contact with the closure member and rigid connection to the first container body, and with coupling means for cooperating with an inserting part of the first connector;
Fig. 5 a cut-away view showing the interface device in a preferred embodiment, with a coupled configuration of the first connector with the second connector before actuation of the puncturing structure;
Fig. 6 shows four containers at respective states of use by the consumer, before shaking and removing the cap, in order to illustrate a way of activating mixing of the contents that are initially separated by an intercompartment membrane;
Fig. 7 is a longitudinal cut-away view of the interface device, showing a connection step to obtain initial coupling position between the first connector and the second connector, before any manual actuation;
Fig. 8 is a view similar to Fig. 7, after a piercing operation to release an internal passage, allowing mixing of the contents;
Fig. 9 illustrates an exemplary embodiment of the closure member used to initially separate the two adjacent compartments of the container;
Fig. 10 is a perspective view of a bottle-like container in accordance with a preferred embodiment of the invention, showing a tamper-evidence element surrounding the interface element;
Figs 11, 12 and 13 schematically illustrate three options, respectively, to fill and seal the two compartments of the container.

### DETAILED DESCRIPTION OF EMBODIMENTS

In the various figures, the same references are used to designate identical or similar elements.

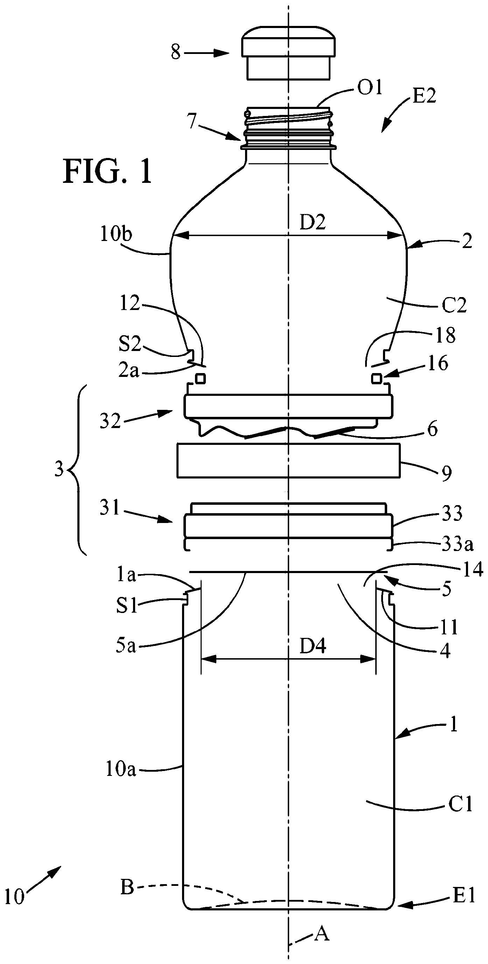

Referring to Fig. 1, the container 10 may form a bottle having at least two compartments C1, C2 that are optionally superimposed. The container 10 is here provided with a first container body 1 and a second container body 2, which are used to form the outer sidewall (10a, 10b, 10c) of the bottle-like container 10. Optionally, such outer sidewall has at least three wall sections: a first wall section 10a included in the first container body 1, a second wall section 10b included in the second container body 2 and a third intermediate wall section 10c included in an interface device 3 that is separate from the first container body 1 and the second container body 2.

The interface device 3 and the container bodies 1, 2, are designed as separate pieces and the interface device 3 may be of smaller axial size than the container bodies 1, 2. The split between the respective volumes of the first compartment C1 formed by the first container body 1 and the second compartment C2 formed by the container body 2 may go from 5-95% to 95-5%. The separation between the first compartment C1 and the second compartment C2 may be provided at the interface device 3, which does not form any intermediate compartment. Indeed, an internal passage 4 sealed by a closure member 5 may be provided in the inner volume surrounded by the interface device 3 and the closure member 5 can directly separate the first compartment C1 from the second compartment C2.

The internal passage 4 may have a diameter D4 that is more than half of maximal radial size, here a maximal diameter D2 of the container 10. More generally, the internal passage 4 may be of greater size than the opening O1 and/or sufficient wide so as to not restrict the flow of the mix M when pouring it through the opening O1.

The closure member 5 can thus be in contact with and directly support a first content 21 stored in the first compartment C1, as long as the closure member 5 is sealing the internal passage 4. Each content 21, 22 may be wet or dry, solid or liquid or mix of the two.

The container 10 is provided with two opposite ends E1, E2. Fig. 1 shows a container lower end or base included in the first container body 1 and provided with a bottom B having a bearing surface (here a closed bottom) for contact on a planar surface, on shelves or any similar support. The container 10 also has an upper open end formed by a mouth of the second container body 2. However, it is understood that the container 10 can also be provided with additional separate parts to define the opposite ends E1, E2. Typically, the container 10 generally includes a lid or cover or cap 8 to seal the mouth formed at the opening O1. The cap 8 may be removable to pour the mix M. Alternatively, the cap 8 may be kept fixed to the container body 2 and provided with a valve or a subpart forming a pouring nozzle.

The end E2 is provided with such opening O1 and may form a top end E2 axially opposite the end E1 provided with the bottom B. A neck 7 or similar pouring part may be connected at an end of the container side wall (10a, 10b, 10c), preferably at the side wall section 10b surrounding the second compartment C2. The container 10 is preferably closed by a cap 8 that is releasably mated (e.g., threadingly secured) to the neck 7 of the second container body 2. Alternatively, the sealing of the opening O1 is performed by a non-repositionable flexible or rigid lid, possibly provided with a pull element such as a pull tab. Besides, the opening O1 is not necessarily provided at an end E2 of narrower size as compared to the other end E1. In some variants, the lid or cap 8 may cover a relatively wide end E1. A flange portion may optionally surround a wide opening formed at the end E1 and/or the container 10 may be provided without any neck or thread.

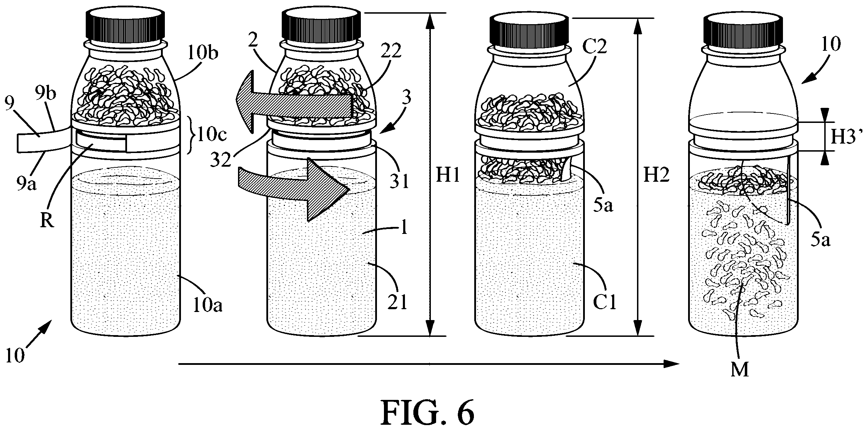

The construction illustrated in Figs 1 and 6 may be preferred to limit the number of pieces to be assembled when producing the container 10. For instance, a packaging with two compartments C1, C2 can be obtained after operatively coupling the first container body 1 and the second container body 2 by using the interface device 3 as intermediate connecting means. A mixing mechanism can be selectively included in the interface device 3, which comprises means for releasing an internal passage 4, allowing communication between the first compartment C1 and the second compartment C2.

A longitudinal axis A may form a common central axis for the three main parts of the container 1, as the first container body 1, the second container body and the interface device 3 typically have a similar tubular side wall section. For a compact construction and ease of mixing between the ingredients initially separated in the respective compartments C1, C2, the internal passage 4 advantageously extends centrally around the longitudinal axis A and, optionally, may be at least as wide as the opening O1 of the container 10. In some variants, the internal passage 4 may be common to more than two chambers/compartments, for instance when a partitioning wall is provided in an inner volume of the first container body 1 and/or in the inner volume of the second container body 2.

Alternatively or additionally, the internal passage 4 may be laterally shifted with respect to a central axis of the container 10. Besides, the outer shape of the container sidewall may be bent so that the interface device 3 and/or the internal passage 4 may be provided at intersection of two distinct axes (one for the first container body 1, the other one for the second container body 2). It is thus understood that the geometry, shape and size of the container 10 can vary, the detailed exemplary design of the interface device 3 shown in the drawings being only provided for illustration.

Referring to Figs 1, 4 and 8-9, the closure member 5 may be partly or entirely flexible. The closure member 5 may be sized as the flange 11 surrounding the opening 14 of the first container body 1, with same outer shape. At least the closing portion 5c of the closure membrane 5 is formed by an intercompartment membrane 5a.

More generally, the closure member 5 is provided with a flexible or semi rigid membrane, preferably of substantially circular section, having at least one portion which is piercable or otherwise rupturable. Such membrane is an intercompartment membrane 5a (or similar diaphragm element) since it directly separates the respective contents 21 and 22 as long as it seals the internal passage 4.

Such intercompartment membrane 5a here defines the closure member 5 and generally has a thickness between 0.01 and 1.0 mm, more typically between 0.05 and 0.1 mm, and can be made for instance, but not limited to, from a film-forming polymer, a plastic polymer, a metal such as aluminum, or combinations thereof, such as a plastic coated aluminum sealing membrane or a lacquer coated aluminum sealing membrane.

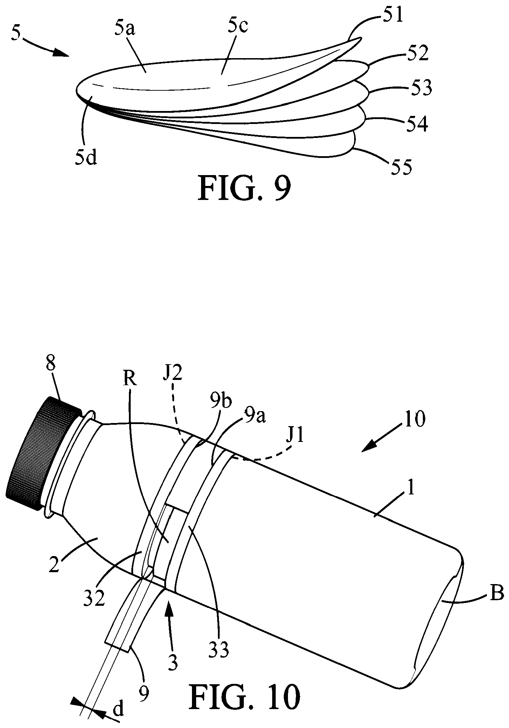

As illustrated in Fig. 9, the membrane 5a may be composed of at least three layers, preferably four or five layers 51, 52, 53, 54, 55, and is preferably opaque. An internal layer is an electrically conducting layer, here an aluminum foil 53 or other similar metal foil. The two outer layers 51, 55 are heat sealable. In a variant, only one of the outer layers 51, 55 is heat sealable and may optionally be attached to the first container body 1 and/or to the first connector 31. Options using a combination of superimposed membranes or similar elements may be used to close the internal passage 4 and allow air-tight attachment to a flange of the container.

Each outer layer 51, 55 may be of Polyethylene or Ethylene Vinyl Acetate Copolymer, for instance. The tensile strength of the membrane 5a is typically inferior to 300 Newton, typically inferior or equal to 100 or 200 Newton, preferably inferior to 50 Newton, and/or has a weakening zone along the longitudinal projection of the free edge of the puncturing structure 6 (at least the area intended to be engaged by the piercing member 6a).

The membrane 5a is sufficiently flexible as to allow that, after the piercing of the membrane 5a, it can be folded by the puncturing structure 6 towards the circumferential wall of the first container body 1.

A PET layer 54, used as an intermediary layer between the aluminum foil 53 or similar metal foil and an outer layer 51, 55 may be provided to increase strength of the membrane 5a. Optionally, a layer 52 made of EPE (Expanded Polyethylene) may be used as an intermediary layer between the aluminum foil 53 or similar metal foil and an outer layer 51, 55. In Fig. 9, the layer 53 is sandwiched between the layers 52 and 54.

Referring to Fig. 6, the first container body 1 is provided with the first compartment C1 for containing a first content 21, while the second container body 2 is provided with a second compartment C2 for containing a second content 22 that is typically of different nature, texture, or any different aspect from the first content 21. The closure member 5 may be attached to a flange or be pinched between two flanges, with preferably a fastening contact onto a flange (formed by the ring part 33) of the first connector 31 and/or a flange 11 of the first container body 1.

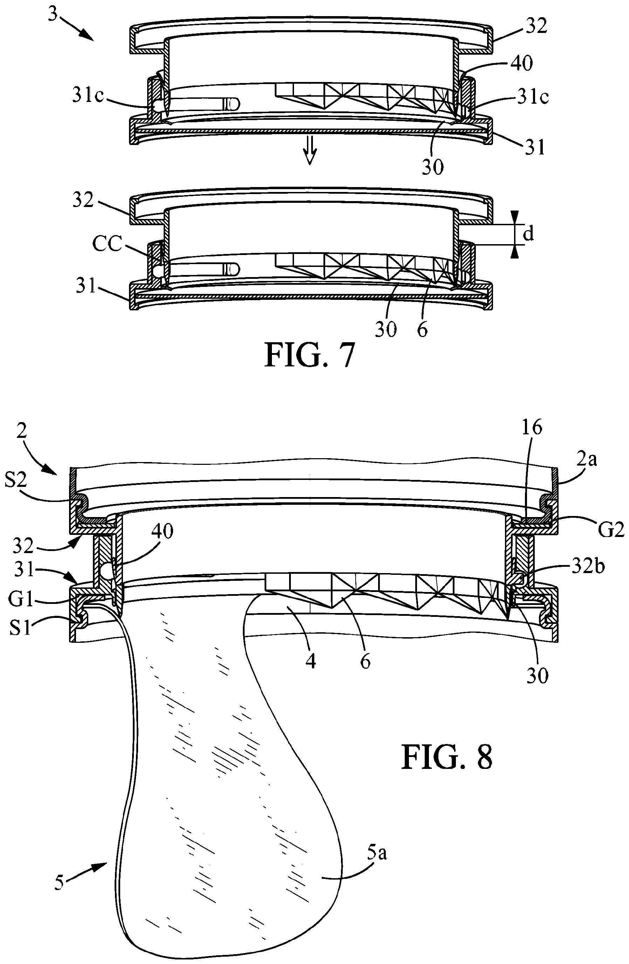

In the example of Fig. 8, it can be seen that the closure member 5 extends, preferably planar, between an annular rim or flange 11 included in the annular end 1a of the first container body 1 and the first connector 31. The closure member 5 may comprise, around a central portion 5c to close the internal passage 4, an annular margin portion 5d extending around the central portion 5c. Such annular margin portion 5d is preferably located in a groove G1 formed in the ring part 33 that acts as a flange. The annular margin portion 5d is typically in contact with an axial surface of the ring part 33 in the illustrated embodiments, so that the membrane 5a directly adheres to the first connector 31, preferably with a chemical bond in thermoplastic material from the membrane 5a and from the first connector 31.

When the annular margin portion 5d contains a metal layer, typically an aluminum layer, induction sealing may be performed to integrally secure the annular end 1a to the first connector 31, when fastening the closure member 5 between the ring part 33 and the rim or flange 11 of the first container body 1.

Referring to Figs 1-6, the interface device 3 forms a part that can extend substantially in the middle of the container 1, so as to form an intermediate wall section 10c (see Fig. 6), away from the opening O1 and the bottom B, extending substantially in the middle of the container side wall (10a, 10b, 10c). The interface device 3 is provided with rigid outer parts, preferably made of plastic material, to define the intermediate wall section. The interface device 3 here comprises a first connector 31 and a second connector 32, each of annular shape and engaged with each other to provide a fluid tight connection between the first compartment C1 and the second compartment C2 when the internal passage 4 is released.

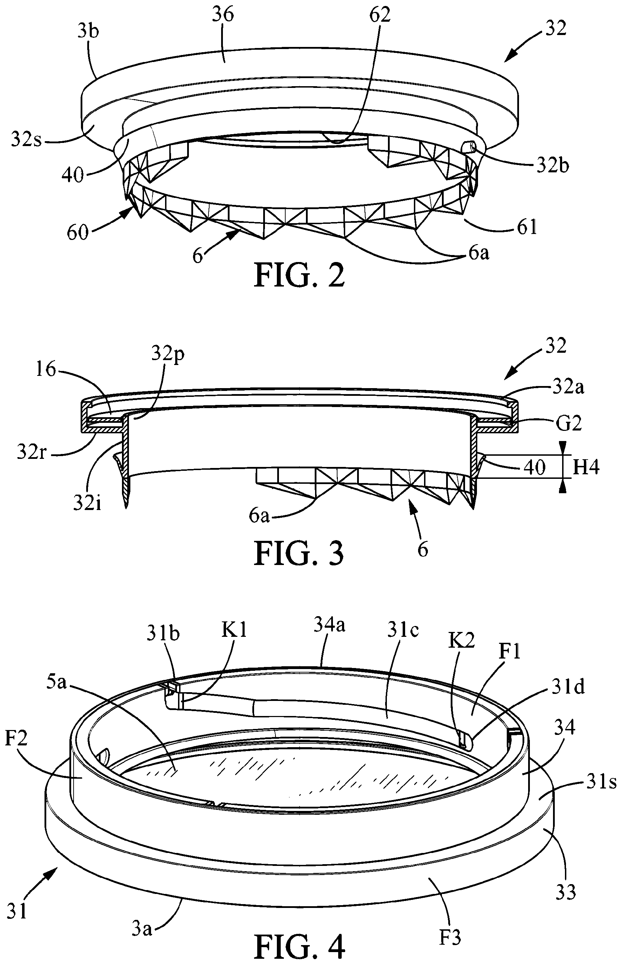

As illustrated in Figs 1 and 4, the first connector 31 may be a single piece of thermoplastic material, comprising a ring part 33 suitable to be fastened to an annular end 1a of the first container body 1, and an annular bearing portion 34 forming a projection that axially extends from an annular radial portion of the ring part 33. The annular bearing portion 34 axially protrudes toward the second container body 2 from a top face of the annular radial portion and is laterally shifted inwardly relative to a peripheral face F3 of the ring part 33, so that an external shoulder 31s is formed in the first connector 31.

The annular bearing portion 34 has an inner guiding face F1, typically provided with coupling means, for guiding movement of the second connector 32, preferably to allow a twist movement. A puncturing structure 6 of the second connector 32, which may form all or part of a free edge of the second connector 32, is orientated downwardly when the annular bearing portion 34 is projecting upwardly. The external shoulder 31s is facing in direction opposite to the general direction of movement of the puncturing structure 6, when releasing the internal passage 4 due to the puncturing of the closure member 5.

The interface device 3 acts as a coupling device to allow a predetermined movement of the second connector 32 (for instance a male connector when including an inserting part 32i) relative to the first connector 31 (female connector when including a bearing portion 34 receiving and guiding the inserting part 32i by the coupling means provided in the inner guiding face F1). Such predetermined movement, for instance a simple twist action, typically a quarter turn, causes release of the internal passage 4 as the membrane 5a is pierced by the puncturing structure 6. The movement is "predetermined" as there are one or more guide elements 32b integrally formed with the second connector 32 and/or one retaining element 31b that prevent the inserting part 32i to detach from the annular bearing portion 34. Accordingly, the mating of these connectors 31, 32 only allows for a determined relative movement, preferably a twist movement that can be actuated with a simple gesture.

The guide elements 32b may comprise or consist in one or more threads. In such case, the inner face F1 has at least one complementary thread.

In a variant, threads formed in the second container 32 can extend around the guide elements 32b that are provided on an outer face of the annular bearing portion 34. Additionally, a contact bead or an elastically deformable barrier element may form an annular contact (optionally a sealing contact) between the inserting part 32i and an inner face of the bearing portion 34. A tamper-evidence band or element may surround the outer face of the annular bearing portion 34, for example to partly cover a part of threads of the first connector 31.

Referring to Fig. 6, the twist movement reduces the final height H2 of the container 10, which is lower than initial height H1. In the annular recess R in the interface device 3, the inserting part 32i cannot be seen at the end of the actuation, only an outer face F2 of the annular bearing portion 34 extending between the fastening parts 33, 36 of the interface device 3.

In a preferred option, the inner guiding face F1 is selectively included in the annular bearing portion 34, so that the ring part 33 cannot be in contact with the second connector 32. The ring part 33 can be used for attachment of the annular end 1a of the first container body 1 and attachment of the closure member 5. The closure member 5 can form a bottom wall of the second compartment C2 and also form an end wall of the first compartment C1.

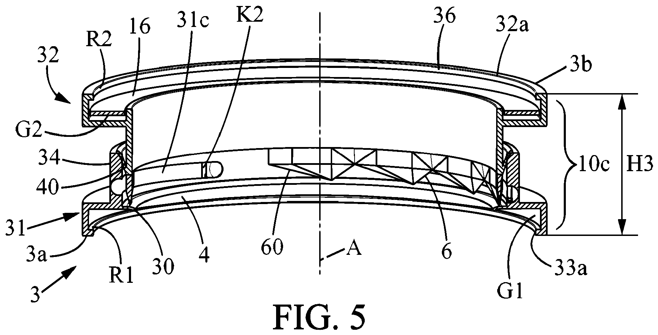

In assembled state of the interface device 3, the second connector 32 (male connector) is coaxially engaged in the first connecter 31 (female connector). The interface device 3, when assembled has two configurations:
- a inactivated configuration in which two opposite axial ends 3a, 3b of the interface device 3 are spaced to define a maximal height H3 of the interface device, as illustrated in Figs 5 and 6 (before actuation of a twist mechanism in the illustrated embodiments), and
- an activated configuration, in which the two opposite axial ends 3a, 3b of the interface device 3 are spaced, so as to define a lower height H3' of the interface device 3 (as illustrated in Fig. 6 after actuation of the twist mechanism).

In the inactivated position, the puncturing structure 6 provided with a plurality of piercing members 6 is in an initial distal position, possibly axially spaced from less than 4 or 5 mm, with respect to the membrane 5a of the closure member 5. Once both main components are fully twisted, the closure member 5 is pushed down by the second connector 32 to allow the second content 22 contained in the second compartment C2 to fall down.

The activated configuration can be actuated by a movement exerted on the second container body 2, as the puncturing structure 6 is rotationally integral to the second container body 2. In the activated configuration, the puncturing structure 6 partly extends in the other compartment, here the first compartment C1 and at least the closing portion 5c of the closure member 5 is displaced to be out of the way of the flow between both compartments C1, C2.

Typically, the closure member 5 is connected to a circumferential attachment surface of the first container body 1, preferably at the annular end 1a of the first container body 1 so as to extend in between the two adjacent compartments C1, C2. After causing the puncturing of the intercompartment membrane 5a, as illustrated in Fig. 6, the container 10 is designed to be shaken/mixed and then dispensed. The container 10 can keep the same activated configuration when shaking, a locking element K2 being typically provided to prevent any internal displacement in the container structure when performing the shaking.

The first compartment C1 and the second compartment C2 may be complementary sub-volumes of a whole interior volume of the container 10. The closing portion 5c, in the activated configuration, only extends in the lower compartment (here the first compartment C1).

Referring to Fig. 6, with both compartments C1, C2 communicating with each other via the internal passage 4, the consumer can shake the activated container 10 and mix the different contents 21, 22. Once mixed, the consumer can open the container 10 and drink/eat/use the fresh mix M.

A strap, which may form a tamper-evidence element 9, can be peeled before use of the container 10. The strap is suitable in helping the consumer to know that the mechanism hasn't been activated. Once the strap has been removed, the consumer twists both components of the container 10 in opposite directions. This twist is about 80 or 90 degrees in the illustrated drawings (see Fig. 6 for instance), but can be adjusted from 10-270 degrees, depending on the needs.

Additionally, as illustrated in Fig. 8, the puncturing structure 6 may be so designed and oriented with respect to the closure member 5 that movement in a first direction, of the second connector 32, relative to the first connector 31, causes a movement in this first direction of the piercing members 6a such that the piercing members 6a can partially pierce the membrane 5a, while a connection is maintained between the closure member 5 (that includes the pierced membrane) and a portion of the circumferential attachment surface. With such arrangement when the first direction is a downward direction, the closure member 5 is not entirely falling in the lower compartment.

The internal passage 4 may optionally extend at same level as the external shoulder 31s and/or be delimited by an annular lip 30 of the annular bearing portion 34. Such annular lip 30 is configured to interact with the inserting part 32i forming the free end 60 of the second connector 32, so as to ensure air tightness around the internal passage 4 (tightness between the first compartment C1 and the inner guiding face F1), after the closure member 5 is punctured. The annular lip 30 may be at same level or in a position adjacent to a junction between a radial portion of the fastening ring part 33 and the tubular side wall of the annular bearing portion 34.

Referring to Fig. 5 and 7, the annular lip 30, flexible, may be an inner lip protruding radially inwards relative to the inner guiding face F1. When engaged by the inserting part 32i of the second connector 32, as illustrated in Fig. 8, the annular lip 30 is bent along direction of the general direction of movement of the second connector 32 (direction parallel to the longitudinal axis A, here a downward direction). The annular lip 30 is thus pressing radially outwards onto a continuous annular surface adjacent to the free end 60 of the second connector 32 when the puncturing structure 6 of the second connector 32 is in a final activated position.

Such final position is shown in Fig. 8, after movement of the puncturing structure 6 of the second connector 32, relative to the first connector 31. The position of the puncturing structure 6 is here an activated position to release the internal passage 4 as the intercompartment membrane 5a has been punctured by several piercing members 6a. Before such movement, the puncturing structure 6 is in the position shown in Fig.5, which is:
- a position distal from the internal passage 4 sealed by the closure member 5, and
- preferably, outside the interior volume of the first container body 1.

Referring to Figs 6 and 8, it can be seen that in the activated position, the first content 21 and the second content 22 mix as the content in the upper compartment, here the second compartment C2, falls by gravity and enters the lower compartment, here the first compartment C1. After mixing occurs, the consumer removes the lid or cap 8. The consumer thus enjoys the freshly mixed composition (drink, heterogeneous composition or the like) when the composition is a food composition. The opening O1 may be formed in a way different from what is shown in Figs 1 and 6, depending on the needs.

In order to provide and maximize a visual effect of the container 10 when using the mixing mechanism, at least the side wall section at the lower side can be made transparent. Also, the two ingredients in the respective compartments C1, C2 can be visually different from one another. For example, a liquid or the like can be contained in one compartment C1, while cereals or other solids can be contained in the other compartment C2. Alternatively, a transparent liquid or gel in one compartment can be mixed with a colorful composition (with fruits, soda, or the like if the mixing corresponds to a food composition) initially contained in the other compartment.

In a specific exemplary embodiment, the two ingredients or contents 21, 22 are two liquid components of a mixed drink that are intended to be mixed with one another to form the final mixed drink. For example, the first compartment C1 can hold a fruit juice, such as orange juice or another juice, like cranberry juice, and the second compartment C2 can hold alcohol, such as vodka. The first and second ingredients/contents (liquids) should optionally be complementary to one another in that in the resulting mixed drink, the first and second liquids are mixed with one another.

The content 21, 22 may be at least partly constituted of food product, flowable detergent, cosmetic, health/medical, biopharmaceutical product. Preferably, the interior volume of the container 10 taken as a whole is inferior or equal to 1 or 2 L, for example with reduced height less than 45 or 50 cm and/or with maximal diameter or transversal size inferior to 25 or 30 cm but superior to 7 cm. The container 10 thus may be compact, and preferably easy to grasp by a single hand.

The container 10 has two compartments C1 and C2 that may be of any suitable capacity. Each container body 1, 2 may have a capacity of, or containing a content of a volume of (or mass of) of 15 or 20 ml (15 g or 20 g), to 1 L (or 1 kg), for example a container of 15 ml (or 15 g) to 50 ml (or 50 g), or 50 ml (or 50 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g) or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1 kg).

A compartment C1, C2 can be filled with any content, the container 10 being a packaging element useful to transport, protect, preserve, and/or otherwise procure said content.

The content 21, 22 can be any kind of content to be procured to a user, for example a consumer, in moderate quantities. The content can for example parts of a food or beverage composition, a drug composition, a personal-care composition, a home-care composition, a home improvement composition, a toy, a small part good.

In one embodiment the first content is a fluid, for example a liquid, and the second content is a solid, for example in the form of powder, granules, flakes, or clusters. In one embodiment the second content is a fluid, for example a liquid, and the first content is a solid, for example in the form of powder, granules, flakes, or clusters. In one embodiment the first and the second contents are fluids, for example liquids. In one embodiment the first and the second contents are solids, for example in the form of powder, granules, flakes, or clusters.

Examples of personal care compositions include hair care compositions such as shampoo compositions, conditioner compositions or hair coloring compositions, skin compositions such soap compositions, body wash compositions, sun protection compositions, hydrating compositions or anti-aging compositions, and make-up compositions. The two contents can be for example two complementary parts of a hair coloring composition, to be mixed just before application onto hair.

Examples of home-care compositions include, fabric care compositions such as laundry compositions or softener compositions, dish-washing compositions such as manual dish washing compositions or automatic dish washing compositions, hard-surface cleaning compositions, such as kitchen cleaning compositions, bathroom cleaning compositions, wood floor cleaning compositions or tiles cleaning compositions.

Examples of home improvement compositions include paints, glues, plasters or cements compositions.

Examples of drug compositions include compositions comprising an active powder or liquid to be mixed with a drinkable medium such as water. For example the first content can be water or a beverage and the second content can be aspirin in a powder form or an inorganic composition for intestinal or gastric disorders.

Food or beverages are compositions that are to be orally consumed. This can be in various forms including liquid, viscous semi-fluid, or solid, optionally as a powder. The food can be a spoonable viscous semi fluid composition or spoonable solid. It can be for example or scoopable solid, as opposed to a spoonable powder.

The beverage can be water, carbonated or non-carbonated, non-alcoholic beverages (also referred to as soft drinks), carbonated or non-carbonated, alcoholic beverages, carbonated or non-carbonated, milk or vegetal milk substitutes.

The food can be cereals, dairy compositions, vegetal dairy substitute compositions, deserts compositions such as creams, mousses, gels, puddings, ice-creams compositions, fruits, vegetables, or fruit or vegetables compositions for example whole fruits or whole fruit parts, fruit purees or jams, meat of meat substitutes, confectionary compositions, sauces compositions, soups compositions, infant nutrition compositions, medical nutrition compositions, coffee creaming or whitening compositions, coffee or chocolate compositions, for example instant coffee or chocolate, or other grocery compositions.

In one embodiment the first content is a liquid dairy or vegetal dairy substitute composition and the second content is cereals. In one embodiment the second content is a liquid dairy or vegetal dairy substitute composition and the first content is cereals.

In one embodiment the first content is water and the second content is an infant formula in powder form. In one embodiment the second content is water and the first content is an infant formula in powder form.

All or part of the food can be a frozen composition (with provision that mixing action is permitted at ambient temperature), chilled or fresh, typically with a storage at a temperature of from 0°C to 10°C, or long shelf ambient temperature food, typically with a storage at a temperature of higher than 15°C.

In some embodiments the food is a wet food compositions, comprising substantial amounts of moisture or water, as opposed to dehydrated food compositions, for example at least 20% by weight, or at least 30% by weight, or at least 40% by weight, or at least 50% by weight, or at least 60% by weight, at least 80% by weight. Such compositions can be more sensitive to contaminations and a high resistance sealing, for example with a high vacuum leak resistance can be appropriate.

Dairy compositions or vegetal dairy substitute compositions typically comprise of dairy material or a dairy substitute material. Herein, unless otherwise provided "dairy" or "milk" can encompass vegetal substitutes, for example based on soy, oats, almond, rice, coconut and mixture thereof.

The dairy composition can be for example a dessert, a fermented dairy composition such as yogurt or kefir, a cheese, butter.

The dairy material is typically comprised of milk and/or ingredients obtained from milk. It is also referred to as a "milk-based composition". Herein milk encompasses animal milk, such as cow's milk, and also substitutes to animal milk, such as vegetal milk, such as soy milk, rice milk, coconut milk, almond milk, oats milk etc...

Dairy compositions are known by the one skilled in the art of dairy products, preferably of fermented dairy products (typically that can be consumed in a flowable state, allowing mixing). Herein a milk-based composition encompasses a composition with milk or milk fractions, and compositions obtained by mixing several previously separated milk fractions. Some water or some additives can be added to said milk, milk fractions and mixtures. Preferably the milk is animal milk, for example cow's milk. Some alternative animal milks can be used, such as sheep milk or goat milk.

The milk-based composition can typically comprise ingredients selected from the group consisting of milk, half skimmed milk, skimmed milk, milk powder, skimmed milk powder, milk concentrate, skim milk concentrate, milk proteins, cream, buttermilk and mixtures thereof. Some water or additives can be mixed therewith. Examples of additives that can be added include sugar, sweeteners, fibers, and texture modifiers.

Unlike conventional systems used to mix a beverage, the interface device 3 of container 10 can provide efficient air tightness around the mixing inner volume before and after actuation of the mixing. Indeed, the interface device 3 is provided with:
- at least one first annular radial contact (air-tight contact) between the first connector 31 and the second connector 32, before the puncturing and after the puncturing of the intercompartment membrane 5a;
- an air-tight sealing contact at fastening junction J1 between the annular end 1a (typically an interior flange 11) of the first container body 1 and the ring part 33 of the first connector 31; and
- an air-tight sealing contact at fastening junction J2 between the annular end 2a (typically an interior flange 12) of the second container body 2 and ring-like flange or radial portion 32r of the second connector 32.

In a preferred embodiment, the closure member 5 contains a metal layer, typically an aluminum layer, so that it can be used to obtain perfect bonding between the first container body 1 and the first connector 31, via induction sealing. More generally, any first sealing element 15 with a metal medium may be used to obtain such bonding, the first sealing element 15 being preferably included in the closure member 5.

A process with induction sealing ensures perfect bonding and rigid connection between the different elements and prevents leakages. No thread is required in any of the annular ends 1a, 2a of the container bodies 1, 2.

Additionally, an annular gasket may be similarly provided to form a second sealing element 16 with a metal medium, allowing induction sealing for attachment of the second container body 2 to the second connector 32. Of course, induction sealing provides airtightness and prevent rotation between any one of the container bodies 1, 2 and the corresponding connector 31, 32 of the interface device 3, so that the twist movement or other appropriate movement is selectively permitted by guided movement of one of the connectors, here the second connector 32, by an inner guiding face of the other connector, here the inner guiding face F1 of the annular bearing portion 34.

Referring to figs 1 and 5, it can be seen that the container 10 may essentially include seven elements to form the packaging part:
- two container bodies 1, 2;
- two connectors 31, 32, each integrally and selectively secured to one of the two container bodies, configured to form the interface device 3;
- two sealing elements 15, 16, respectively used for the fastening to the interface device 3, at the annular end (open end) of the container bodies 1, 2; and
- a lid or cap 8.
In some preferred embodiments, the two container bodies 1, 2 may be produced from a same pre-container 44. Besides, additional elements may also be provided, for example for forming a decorative packaging around a functional part or to seal an additional opening.

Now referring to Figs 6 and 10-13, it can be seen that the container 10 may form a bottle assembly that combine two bottle elements. The first container body 1 and the second container body 2 can be produced from a single pre-container 44 or from various container parts (independently produced).

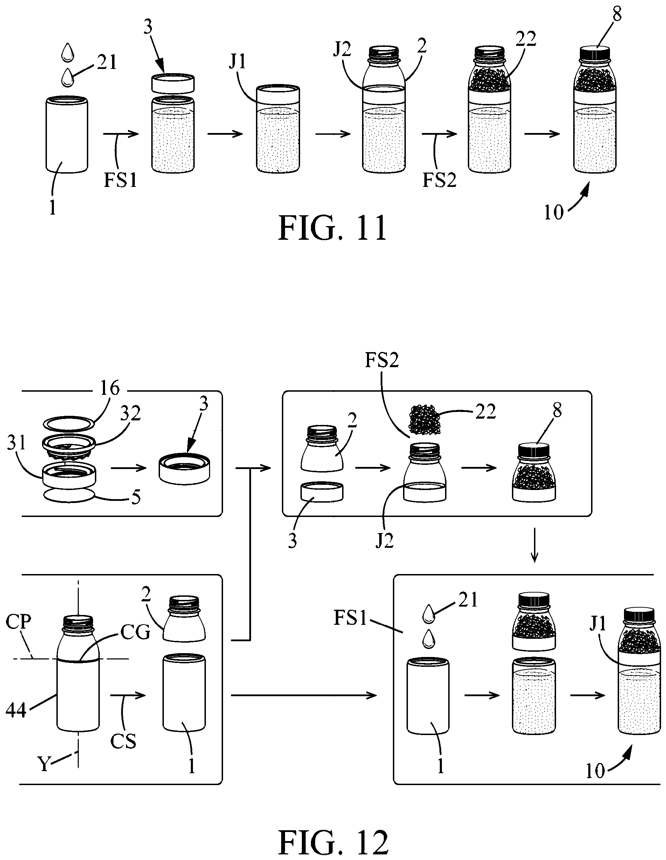

The pre-container 44 shown in figs 12-13 may be a bottle having a technical design, typically with a groove CG. Preferably, such pre-container 44 is formed by blowing plastic material, for instance from a preform having a greater thickness than final thickness in the container bodies 1, 2. The pre-container 44 extends along a central axis Y, so as to define an opened pre-container top section and a hollow body lower section. The pre-container 44 has a pre-container sidewall that extends around this central axis Y and is provided with a circumferential groove CG, here formed in a virtual plane CP perpendicular to the central axis Y as illustrated in the non-limiting example of Fig. 12.

The pre-container 44 is cut, such that the opened pre-container top section forms all or part of the first container body 1 that is provided with an opening O1, preferably a top opening, and the lower section forms the second container body 2. The cutting is performed transversally to the central axis Y, at said circumferential groove CG, so as to form an open end of the first container body 1 and an open end of the second container body 2 that are distinct from the opening O1.

When producing the first container body 1 and the second container body 2 from such pre-container 44, each container body open end may be delimited by an annular inner rim of a flange 11, 12 (interior flange). While the interior flange 11, 12 of each container body 1, 2 may be initially angled while remaining flexible, it can advantageously be pressed by the interface device 3 when coupling each of the connectors 31, 32 to the corresponding container body 1, 2.

Besides, one of the connectors 31, 32 may be provided with a band-like element or strap that may be torn to be detached from a longitudinal attachment edge fastened to an outer face of the connector 31, 32, for instance in region of respective outer shoulders 31s, 32s of these connectors 31, 32. For instance, the first connector 31 may be provided with such band-like element that is suitable to form a tamper-evidence element 9, after a complementary bonding of this element to the second connector 32. The bonding is performed after assembling the connectors 31, 32 in air-tight manner. Optionally, the tamper-evidence element 9 may be fastened so as to provide an additional seal around a junction between the first connector 31 and the second connector 32.

Referring to Fig 6 and 10, the interface device 3 is ring-shaped and may be provided with a tamper-evidence element 9, typically elongated to circumferentially cover an outer annular recess R of the interface device 3. Here the outer annular recess R is provided between the external shoulder 31s (of annular shape) of the first connector 31 and an opposite external shoulder 32s of the second connector 32. The tamper evidence element 9 may be a band and has two opposite edges 9a, 9b connected each to the interface device 3. With the edge 9a connected to the first connector 31 and the other edge 9b connected to the second connector 32, and with a circular or similar shape to entirely encircling the recess R, the tamper-evidence element 9 may prevent inadvertently twisting the container 10.

As illustrated, the tamper evidence element 9 is not connected to any one of the container bodies 1, 2 and plastic material can be saved as compared to solutions where a significant part of the container 10 is wrapped by a tamper-evidence element.

The tamper evidence element 9 can entirely surround the outer face of the annular bearing portion 34, so that the recess R cannot be observed before tearing at least one removable part of the tamper evidence element 9. More generally, the interface device 3 may be provided with a removable device attached to the first connector 31 and the second connector 32 to prevent the puncturing structure 6 of the second connector 32 from moving relative to the first connector 31.

Also, it is understood that any tamper evidence means may be provided, for example using frangible bridge portions that are necessarily broken before moving the second connector 32 relative to the first connector 31, so that any actuation of the mechanism can be perceived when observing the interface device 3. A rigid ring or another kind of annular band may be provided with such frangible bridge portions connected to each of the connectors 31, 32. Of course, the tamper evidence means may comprise or consist in discontinuous elements, including frangible bridge portions connected to any part of the connectors 31, 32.

Now referring to Figs 2-3 and 5, an exemplary second connector 32 is described with greater detail.

The second connector 32 has a fitment part 36 of annular shape, forming an axial end 3b of the interface device 3 and suitable to accommodate the annular end 2a, typically by covering the interior flange 12 of the second container body 2. A radial portion 32r of the fitment part 36, of annular shape, is provided to selectively enlarge the cross-section of the interface device 3 in the axial end 3b, away from the mechanism part of the second connector 32. An external shoulder 32s, of annular shape, is thus formed, here by the radial portion 32r, and may be used to limit linear movement of the second connector 32 relative to the first connector 31, by abutting a free edge at the end 34a of the mechanism part (corresponding to the annular bearing portion 34) of the first connector 31.

In the assembled container 1, the fitment part 36 is provided with a side wall, in order to surround and cover an annular outer groove of the second container body 2. Such outer groove extends annularly and is delimited by:
- an outer shoulder S2 formed in the second container body 2; and
- a tapering curved section forming part of the interior flange 12.

The outer shoulder S2 of second container body 2 forms an axial surface axially engaged against an abutment element 32a of the axial end 3b. The abutment element 32a is protruding radially inward from the side wall of the fitment part 36, to penetrate into the outer groove of the second container body 2. In the assembled state, the fastening interior flange 12 extends entirely in the inner groove G2 provided between the abutment element 32a and the radial portion 32r. In radial direction, such inner groove G2 is delimited between the outer side wall of the fitment part 36 and an axial projection 32p of annular shape that extends in continuation from the cylindrical portion of the inserting part 32i. Such axial projection 32p may be of shorter height than the side wall of the fitment part 36.

Before the fastening, typically by induction sealing, the second sealing element 16 (here an annular gasket) is inserted in the inner groove G2, axially between the interior flange 12 and the radial portion 32r that is here substantially planar.

The second sealing element 16 may be produced from a multilayer foil, for instance with identical or similar structure as compared to the structure of the membrane 5a shown in Fig. 9, but with an annular shape to surround a compartment, here the second compartment C2, and the second connector 32. The annular recess R may thus extend axially between the sealing elements 15, 16, as the closure member 5 extends axially below (entirely below) the second connector 32, before the activated configuration.

At the opposite from the fitment part 36, the second connector 32 has a free end 60 forming a free edge of annular shape. Specific teeth or piercing members 6a, designed to punch and cut the intercompartment membrane 5a (which may be an induction lid in the Figs 4 and 9), are provided on a first part 61 of the free end 60. Such first part 61 may include a continuous row of teeth designed to pierce and cut the membrane 5a and then folding the cut membrane 5a out of the way (the internal passage 4 being essentially free of any packaging material thanks to such folding, the first part 61 typically representing at least one half of the circumference of the free end 60 of the inserting part 32i and being typically rotated of angle of about 10-90° or more).

A complementary second part 62 of the free end 60 may be formed without any piercing members. With such arrangement, the membrane 5a may be pierced along a partially circumferential piercing path, whereby a connection is maintained between the pierced membrane and a circumferential rim onto which the annular margin portion 5d is attached, through a non-pierced segment of the membrane 5a. While a number of teeth or piercing members 6a comprised between 5 and 20, preferably between 7 and 15, is shown in Fig. 2, it is understood that the design of the puncturing structure 6 may vary to permit releasing of the internal passage 4.

The second connector 32 is typically a male connector provided with an inserting part 32i of tubular shape that is fitted in the first connector 31 acting as a female connector. The inserting part 32i comprises the free end 60 of annular shape of the second connector 32.

As illustrated in Figs 2-3, such inserting part 32i is provided with an annular outer lip 40 in annular sealing contact with an inner face, typically the inner guiding face F1, of the first connector 31 in a circumferential contact area CC. The outer lip 40 may taper from an annular free edge toward its junction with a cylindrical protecting portion that belongs to the inserting part 32i. Such junction may be circular, such that a peripheral intersection line of circular shape is defined between the outer lip 40 and the cylindrical protecting portion. Here, the inserting part 32i has a cylindrical protecting portion that at least partly covers coupling means formed on the inner guiding face F1 of the first connector 31. The cylindrical protecting portion extends axially from the external shoulder 32s to the annular free edge of the inserting part 32i. The inserting part 32i is also provided with at least two circumferentially spaced guide elements 32b formed on an outer face of the inserting part 32i. The guide elements 32b are here in form of lugs protruding radially outward, and preferably including between two and six lugs.

The spaced guide elements 32b cooperate with the coupling means formed on the inner guiding face F1, so as to guide movement of the second connector 32 and also block the movement at respective stroke ends.

Optionally, the guide elements 32b, which may extend adjacent to or in the outer lip 40, are axially closer from the circumferential contact area CC than from the annular free edge. With such arrangement, the guide elements 32b may be engaged with the coupling means before obtaining the radial sealing contact between the connectors 31, 32. The puncturing structure 6 may be sufficiently distant, axially, from the circumferential contact area CC where an air-tight contact is provided, so that the cylindrical protecting portion efficiently covers the coupling means, despite some gaps between the piercing members 6a.

Regarding the first connector 31, the ring part 33 may be structurally and functionally identical or similar to the fitment part 36 of the second connector 32. Indeed, the ring part 33 forms an axial end 3a of the interface device 3, is used to accommodate the annular end 1a, and typically comprises:
- a side wall of annular shape, adapted to surround and cover an annular outer groove of the first container body 1;
- a radial portion, of annular shape, to selectively enlarge the cross-section of the interface device 3 in the axial end 3a, away from the mechanism part of the first connector 31;
- an abutment element 33a (Fig. 5), which is protruding radially inward from the side wall of the ring part 33, to penetrate into the outer groove of the first container body 1 (as illustrated in Fig. 8).

Referring to Fig. 1, it can be seen that the first container body 1 may include an outer groove that extends annularly and is delimited by:
- an outer shoulder S1 formed in the first container body 1; and
- a tapering curved section forming part of the interior flange 11.

As illustrated in Fig. 8, the outer shoulder S1 of the first container body 1 typically forms an axial surface axially engaged against the abutment element 33a of the axial end 3a. In the assembled state, the fastening interior flange 12 extends entirely in the inner groove G1 formed between the abutment element 33a and the radial portion.

Before the fastening between the first container body 1 and the first connector 31, typically by induction sealing, the first sealing element 15 (here included in a margin portion of the closure member 5) is located in the inner groove G1, axially between the interior flange 11 and the radial portion that may be substantially planar.

Referring to Fig. 4, the annular bearing portion 34 included in the first connector 31 forms a cylindrical projection of lower cross-section as compared to the ring part 33. The annular bearing portion 34 is provided with coupling means to receive and guide the inserting part 32i of the second connector 32. As illustrated in Fig. 3, the inserting part 32i is also of cylindrical shape to mate with the annular bearing portion 34. While such cylindrical design is required when the interface device 3 provides a twist movement for obtaining the activated configuration, it is understood that other shapes may be chosen when the puncturing of the closure member 5 is only linearly actuated, parallel to the longitudinal axis A (without any rotation or without significant rotation around the longitudinal axis A). When having such linear actuation, the first part 61 used to puncture the membrane 5a may represent more than 75% of the total circumference of the free end 60 of the inserting part 32i.

The interface device 3 may be configured in various ways, preferably allowing a twist action which enables a relative rotary and vertical motion between teeth or similar piercing member 6a and the closure member 5.

For allowing a twist movement when actuating the activated position, the coupling means may be provided with one or more helical grooves 31c, formed as recesses in thickness of the cylindrical bearing portion 34. The guide elements 32b may include lugs engaged in such grooves 31c when the interface device 3 is assembled. More generally, the interface device 3 may be provided with any kind of helical cam engaging with one or more guide elements, so that the second connector 32 is movable in translation combined with rotation, relative to the first connector 31.

Referring to Figs 4 and 7, it can be seen that the interface device 3 comprises at least one detent element 31b, optionally formed in an inner face of the annular bearing portion 34 and configured to engage with a retaining element integral with the second connector 32. Such arrangement prevents the second connector 32 from being detached from the first connector 31. One or more retaining elements may be formed by the one or more guide elements 32b (shown in Fig. 2), for instance when the guide elements 32b are external projections or lugs formed on the second connector 32.

The detent element 31b may be arranged at an inlet section of the helical cam (the helical cam being typically a groove 31c). The guide elements 32b may be configured to engage in one way through the detent element 31b to penetrate the groove 31c. The detent element 31b is provided in an axial mouth of the groove 31c.

Additionally or independently, the helical groove 31c may be provided with at least one relief or similar irregularity, forming a locking element K1, K2 (distinct from the detent element 31b) which the guide element 32b abuts, typically by friction, when displaced in the helical groove 31c. Such locking element K1, K2 may be a friction element, which does not prevent the displacement of the guide element 32b but requires a force threshold to be overcome as it creates a friction contact. In the non-limiting embodiment of Fig. 4, the inner guiding face F1 of the annular bearing portion 34 includes a first locking element K1, close to the inlet of the groove 31c, so that the corresponding guide element 32b can remain in an initial position, between the detent element 31b and the locking element K1. This prevents accidental twist of the container 10. As long as the guide element 32b is in the initial position, the inserting part 32i of second connector 32 is kept axially distant from the membrane 5a of the closure member 5. Of course, actuation movement to displace the guide element 32b over the locking element K1 may also (additionally or alternatively) be prevented by an external removable element, typically attached to the two connectors 31, 32 and possibly used as a tamper-evidence element 9.

Besides, the interface device 3 may comprise a locking element K2, distinct from the retaining element and from the detent element 31b, and which is capable of engaging with one among the retaining element and the detent element so as to rotationally lock the activated position such as shown in Fig. 8.

Referring to Fig. 4, the locking element K2 may be provided at or close to a circumferential end of the helical grove 31c. The locking element K2 may be sloped so that the guide element 32b may slide over it but cannot return, when displaced in the helical groove 31c in direction opposite to the twist direction to actuate release of the internal passage 4. In such embodiment, one or more locking elements K2 are formed in the first connector 31, in the inner guiding face F1. The one or more locking elements K2 rotationally lock the activated position by forming an abutment face orientated toward the end 31d of the groove 31c. The guide element 32b engaged in the groove 31c is placed, at the end of the stroke of the twist, between the end 31d and the locking element K2. Such position may be a position lower than initial position where the same guide element 32b is retained by the locking element K1, when the container 10 stands vertically (with the second compartment C2 superimposed relative to the first compartment C1). The one or more locking elements K2 provide a locking feature to avoid further twists of the container 10 once the internal passage 4 is open.

In variants, the locking element K2 may cooperate with another relief or part of the second connector 32, for example with a detent element when such detent element is formed in the second connector 32 to prevent detachment from the first connector 31.

Referring to Fig.10, the initial distance d between the external shoulder 32s and the annular bearing portion 34 may be about one half or less of the initial height H3 of the interface device 3. This means that the longitudinal component of the displacement can be low, especially when height H3 (measured parallel to a central axis of the interface device 3) is also low, typically lower than 50 or 60 mm. This is of interest to form a compact container 10. After the twist actuation, the advance of the second connector 32 is such that d = 0, the axial end 34a of the annular bearing portion 34 being in axial contact with the external shoulder 32s.

The outer lip 40 may be designed and sized to have a longitudinal extension H4 that is lower than longitudinal extension of the facing annular region of the annular bearing portion 34. The outer lip 40 may act as a barrier to prevent insertion of contaminants in the grooves 31c, by extending from the rim included in the axial end 34a and the grooves 31c, at least before use of the container 10. Even in the contracted state of the interface device 3, after actuation, the outer lip 40 may be in radial contact against the inner guiding face F1, whereby it forms a first barrier element (not necessarily sealing in tight manner from outside the container 1) that may prevent too many external contaminants from accumulating along the second barrier (air-tight barrier) formed by the lip 30.

More generally, it is of interest to have the second connector 32 in radial annular contact with the inner guiding face F1, using one or more a circumferential flexible lips 30, 40 included in the interface device 3. Typically, at least one of these lips 30, 40 is capable to provide a hermetical contact (with a continuous radial annular contact), before and/or after the actuation to obtain the activated configuration.

Now referring to Figs 6-8 and 11, 13, exemplary assembling methods to produce a container 10 in accordance with the invention will be described.

Before the assembling steps, container bodies 1, 2, and respective connectors 31, 32 of the interface device 3 have to be produced, typically using thermoplastic material without any mineral foils (no metal foil) for each of the main components. The container bodies 1, 2 may be subparts of a blow bottle or similar blown pre-container 44 of same plastic material. This may be of interest, in order to to form annular ends 1a, 2a of identical or similar size and shape for each of the two container bodies 1, 2. A simple cutting step in a virtual plane CP of a circumferential groove CG, allows identical open ends to be obtained, while forming an interior flange 11, 12 suitable for a filling in a fitment part or similar fastening portion of the connectors 31, 32.

Optionally, the container side wall may be provided with ribs, for instance generally spiraling external ribs, on one or two of the two container sections formed by the first container body 1 and the second container body 2. Such ribs facilitate gripping for twisting. In a preferred embodiment, the ribs extend spiral around the first container body 1 and around the second container body 2 in opposite directions. When obtaining the bodies 1, 2 from a pre-container 44, such pre-container 44 already includes such ribs.

Regarding the pre-container 44 produced to obtain the container bodies 1, 2, such pre-container 44 can typically formed by blowing plastic material from a preform of relatively high thickness. The pre-container 44 may be produced as an optimized intermediary blow-molded piece, ready to be cut, preferably by trimming, thanks to a circumferential groove CG (shown in Figs 12-13 when the pre-container 44 has not been trimmed yet) or similar relief facilitating the cut. Two additional grooves, preferably of lower depth, may extend close and parallel to the circumferential grove CG, so as to form the respective shoulders S1, S2. The fastening parts 33, 36 of the connectors 31, 32 may be provided with inner protrusions R1, R2 to engage such additional grooves, and the shoulders S1, S2 may each be used as axial abutment surface in assembled state of the container 10.

As illustrated in Figs 12-13, a cutting step CS may be performed to separately obtain the first container body 1 and the second container body 2. Such cutting step CS may also be provided before the filling and sealing steps performed according to option of Fig. 11. A cutting element may be inserted through the pre-container sidewall at a bottom line (typically a circular bottom line) of the groove CG, so as to perform the trimming.

Before the cutting, preferably the trimming, the pre-container 44 is obtained in a mold. Such pre-container 40 may be produced by means of blow molding a preform containing PE, PP, PET or similar polymer plastic material. The method to obtain the pre-container 44 may be an injection blow molding method for example an injection stretch blow molding method (both being referred to as I(S)BM), or an extrusion blow molding method (EBM). Such method is suitable to produce a pre-container 44 having a first end provided with a single opening that can optionally directly define the container opening O1.

The opening O1 may be circular and provided with a diameter comprised between 18 mm and 36 mm, which is advantageous compromise for fast filling of the content 22 and for appropriate pouring of the mix M.

The average thickness of the pre-container sidewall may be typically inferior to 500 or 600 µm, preferably 400 µm.

Use of same material for the container bodies 1, 2 is of interest for recycling. At least one section of the side wall of the container 10 can be transparent or translucid. Preferably, the first container body 1 and the second container body 2 are each transparent.

Regarding the circumferential groove CG, formed in the sidewall to allow the cut, it may have a V-shape longitudinal profile in the sidewall, while additional grooves are U-shaped and of lower depth. The V-shape is defined with a determined apex angle also called the aperture angle, which is typically comprised between 10° and 40°, as measured in any longitudinal plane parallel to the central axis Y. Such aperture angle is typically twice the angle obtained after a trimming when the groove has a symmetrical V-shape profile. It is thus understood that the interior flanges 11, 12 are angled, at least before forming the fastening junctions J1, J2.

The trimming at the bottom line of the groove CG is performed using suitable trimming equipment. When the bottom line is circular, a rotation movement may be used for the cutting edge or for the pre-container 44. Each blade used for the trimming is extending transversally relative to the central axis Y.

Referring to Figs 11-12 the trimming step may be followed by:
- A) a filling step FS1 and a sealing step for joining the interface device 3 and sealing a compartment C1, C2, for one of the container bodies 1, 2;
- B) a filling step FS2;
- C) an assembling step to obtain the full container sidewall (10a, 10b, 10c);
- D) a sealing of the container opening O1 by a cap 8.

Operations A) may be performed with the filling prior to the sealing, in order to fill and seal the first compartment C1, as illustrated in option of Fig. 11. Alternatively, operations A) may be performed with the sealing step prior to the filling, in order to be able to fill and seal, by use of the cap 8, the second compartment C2, as illustrated in option of Fig. 12.

It is understood that step C) may be performed before the second filling step FS2 (as in option of Fig. 11) or after performing the two filling steps FS1, FS2 (as in option of Fig. 12). The filling step FS1 is typically related to the first compartment C1, which has here a single access corresponding to the internal passage 4, while the filling step FS2 is related to the second compartment C2, that directly opens outside via the opening O1 when a lid or cap 8 fixed to the end E2 is removed.

A coupling between the connectors 31, 32, prior to any sealing operation for any one of the compartments C1, C2, may be advantageous when a part of the container 10, for instance the interface device 3, is produced in a first industrial facility distinct from a second industrial facility where the container 10 is finally assembled. Such kind of option is illustrated in Figs 11-12.

The technology FFS (Form, Fill and Seal) may typically be used to produce at high rate the containers 10, each conventionally sealed by a cap 8. Referring to Figs 11-12, the interface device 3 is assembled/coupled before filling any one of the compartments C1, C2.

Referring to Fig. 11, the interface device 3 forms a capping element sealing one of the compartment C1 (after a first filling step FS1), before using an end cap 8 to perform a final seal (after a second filling step FS2), sealing the other compartment C2. With such option, junction J1 with air-tight sealing contact to seal the first compartment C1 containing the content 21 (here a liquid content), can be realized just before junction J2 with air-tight sealing.

In Fig.12, the interface device 3 may already be in a coupled state (as illustrated in Fig. 7, typically with the sealing circumferential contact area CC between the first connector 31 and the second connector 32) before performing the first junction J1 between the first container body 1 and the first connector 31.

Preferably, a metal medium of the closure member 5 is used when fastening the first connector 31 to the interior flange 11 or similar surface of the annular end 1a to the ring part 33, the junction J1 being here obtained by induction sealing. A pre-attachment step may be provided, to have the closure member 5 already fixed in the inner groove G1 of the first connector 31 before pressing and heating (here by induction) the interior flange 11 onto an underside of the ring part 33.

Referring to Fig. 12, it can be seen that the annular gasket forming the second sealing element 16 may be also embedded in the interface device 3, before forming the junction J2 with the second container body 2.

The flange of the first container body 1 may be an interior flange 11 initially angled, so as to taper opposite the bottom B or similar part forming the end E1 (the interior flange 11 is thus tapering upwardly when the first container body 1 is in an upstanding position as illustrated in Figs 1, 6 and 11). Such interior flange 11 is pressed onto the first connector 31 when fastened to form the junction J1 with the first connector 31, so that the interior flange 11 becomes more flat in a sealed configuration of the first compartment C1. Initial angle may be comprised between 5 and 20°, preferably around 15° (angle with respect to plane formed at the body opening 14) before assembling the interface device 3 and the first container body 1. The final angle is typically less than 5°, preferably less than 1 or 2°.

It is thus understood that height of the interior flange 11, measured in vertical direction, is minimized (and reduced as compared to height of the interior flange 11 before the sealing). Herein the term "vertical" can refer to the direction of the longitudinal axis A. The term "horizontal" can refer to the plane perpendicular to the "vertical" (each of the body openings 14 and 18 in the mutually facing annular ends 1a, 2a typically extending horizontally).

Similarly, the flange of the second container body 2 may an interior flange 12 initially angled that is pressed by axial contact onto the second connector 32, when fastened to the fitment part 36, inside the inner groove G2. The interior flange 12 becomes more flat in a sealed configuration of the second compartment C2. Same angle values as for the other interior flange 11 may be used, respectively before and after the sealing to form the junction J2.

In other words, the interior flanges 11, 12, which are directly obtained from a cutting step to surround the respective openings 14, 18, may taper toward their free edge (free edge of the annular end 1a or 2a). The cut may be a "rough cut", which means there is typically no need for an additional precision trimming step or other additional cut. This is advantageously obtained by the design of the groove CG, and/or the kind of blade used for the cutting step CG.

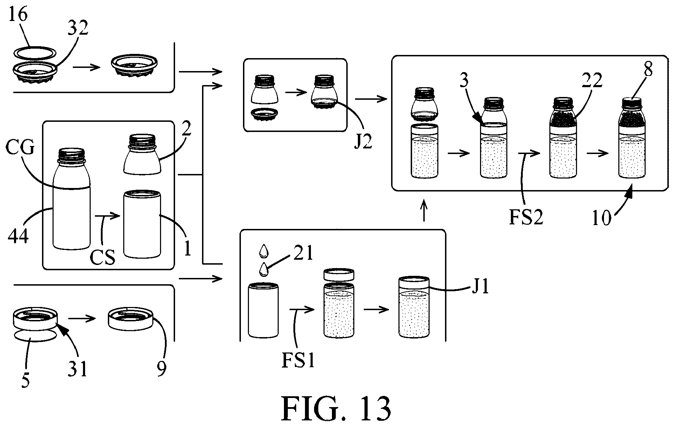

Referring to Fig. 13, the junctions J1 and J2 to the connectors 31, 32 may be respectively performed in parallel, before coupling the first connector 31 with the second connector 32. In such case, a compartment already delimited by a closed end, here the first compartment C1 (with the bottom B at the lower end E1), can be filled at the filling step FS1 before forming the corresponding junction J1 and before forming the interface device 3. In such embodiment, the first connector 31 provided with the closure member 5 may be firstly induction sealed to the interior flange 11 of the first container body 1, and secondly coupled with the second connector 32, for instance by receiving the inserting part 32i with the guide elements 32b inserted in the grooves 31. Fig.7 shows such coupling between the inserting part 32i and the annular bearing portion 34 to obtain the sealing circumferential contact area CC, which helps in obtaining a tightly closed compartment C2 above the closure member 5.

Still referring to Fig. 13, the second filling step FS2 in the second compartment C2 and the final sealing to close the second compartment C2 are performed when the first compartment C1 of the container 10 has already been filled and sealed.

The coupling at late stage between the connectors 31, 32, realized in a connection step performed after obtaining the fastening junctions J1, J2 in the embodiment of Fig. 13, may be of interest when a very efficient and robust attachment is required. Indeed the junctions J1 and J2 can be prepared separately, possibly by using a specific sealing tool (one sealing tool to integrally secure the first connector 31 to the first container body 1, and another sealing tool to integrally secure the second connector 32 to the second container body 2). It may be advantageous to increase production rate when the sealing step takes more time, as compared to other steps (the coupling between the connectors 31, 32 and the respective filling steps FS1, FS2 may be for instance faster steps). Accordingly, parallel induction sealing steps can be preferred to a sequential process.

Production of the cap 8 and the sealing elements 15, 16 need not to be described in detail. Typically, the closure member 5 to be associated with the first connector 31 and the annular gasket to be associated with the second connector 31 may be obtained by any suitable process. The sealing elements 15, 16 preferably include each a metal medium, suitable to make efficient bonding by induction sealing the respective connectors 31, 32 to the corresponding annular end 1a, 1b of the container bodies 1, 2. In variants, the sealing elements 15, 16 are any suitable separate pieces to enhance bonding strength between a connector 31 or 32 and a container body 1 or 2.

The interface device 3 may be an assembly of two injection molded pieces of thermoplastic material or composite material: the first connector 31 and the second connector 32. The teeth or similar piercing members 6a of the puncturing structure 6 and the fitment part 36 are thus integrally formed with the inserting part 32i, while the annular bearing portion 34 is integrally formed with the ring part 33.

For simplifying integration of the container bodies 1, 2, it may be advantageous to associate each sealing element 15, 16 with a corresponding connector 31, 32, by preliminary placing:
- the closure member 5 provided with/constituting the first sealing element 15, in the inner groove G1 of the first connector 31;
- the annular gasket forming the second sealing element 16 in the inner groove G2 of the second connector 32.

Here, the method to produce the container 10 optionally includes induction sealing one of two opposite axial ends 3a, 3b of the interface device 3 to the first container body 1, preferably to a top of the interior flange 11, using a first metal medium adjacent to the first junction J1. The method may also comprise induction sealing the other one of two opposite axial ends 3a, 3b to the second container body 2, preferably to an underside of the interior flange 12, using a second metal medium adjacent to the second junction J2.

Referring to Figs 11, 12 and 13, it can be seen that the closure member 5 is placed between the annular end 1a of the first container body 1 and the ring part 33 of the first connector 31, when forming the first junction J1. The first metal medium may be included as an inner layer of the closure member 5, which defines the first sealing element 15. A current can be induced in such metal medium that generates heat to melt and chemically bond the closure member 5, in the annular margin portion 5d, to the axial face (top face) of the interior flange 11. The metal medium is included in the closure member 5 as a full disc, or possibly with an annular shape or other similar shape, with provision that the metal layer extends at least at least in an annular margin portion 5d surrounding the central closing portion 5c and covering the interior flange 11.

Similarly the annular gasket constitutes the second sealing element 16 and may be provided with a second metal medium included, preferably as an inner layer, in the gasket. Alternatively, such metal medium may be found in the annular end (1a or 2a) or the corresponding connector (31 or 32). In variants, such metal medium may be provided in plastic or composite material forming the first connector 31 and/or the second connector.

After the ring part 33 of the first connector 31 has been placed in axial contact onto the first container body 1, with a metal medium (any kind of electrically conducting material including a metal element, for instance an aluminum foil) adjacent to the fastening surface of the ring part 33, an induction sealing device is used for sealing the first connector 31 to the first container body 1 by inducing a current in the metal medium from the magnetic field created by an electrical current flowing from the induction sealing device.

Preferably, such sealing is performed after filling the first container body 1 with a product.

In a variant, the closure member 5 may be already sealing the first container body 1, so that the first container body 1 is closed before the fastening of the first connector 31.

In an optional embodiment, the induction sealing is performed using at least one annular induction sealing head through which the container 10 is passed, so that at least one induction seal gasket or part including a metal medium is activated. Possibly, a same induction sealing head may be used to form the respective fastening junctions J1, J2. For this purpose, the sealing head may move with one or more of the parts of the container 10 that are being assembled.

After achieving the assembling steps, the containers 10 may be grouped in a pack. For example, a wrapping element made of cardboard or plastic may be used for packing the containers 10 in two rows. The wrapping element, may define a top panel, a bottom panel and at least two side panels. Spacing elements, for example a beam member or folded members, may be optionally provided to maintain the containers in parallel rows.

More generally, such food pack may be provided with at least one row of containers 10.

The present invention has been described in connection with the preferred embodiments. These embodiments, however, are merely for example and the invention is not restricted thereto. For instance, while the drawings show a coupling mechanism having grooves 31c facing inwardly and formed in an innermost face of a female connector (first connector 31), alternative coupling means may be used. Such coupling means can also be provided in an outer skirt of one of the connectors 31, 32.

Additionally, the second connector 32 is not necessarily pivoting around a central axis A. In a variant, a cam element may be provided to guide a sliding movement (not necessarily strictly parallel to the central axis A) or a linear movement is obtained without rotation of the second connector 32.

In some embodiments, the second connector 32 can include a pair of circumferentially spaced actuating elements to unlock an axial sliding of the second connector 32 relative to the first connector 31. With a single hand, a consumer may simultaneously push the actuating elements to unlock the sliding (radial push in inward direction, to suppress a retaining effect) and axially push the second container body 2 closer to the first container body 1, so at to slidably move the puncturing structure 6 of the first connector (secured to the first container body 1) between an initial position and an activated position. Typically, a final locking action may be provided to prevent reverse movement of the puncturing structure 6. Actuation can be done by a simple linear gesture.

It will be understood by those skilled in the art that other variations and modifications can easily be made within the scope of the invention as defined by the appended claims, thus it is only intended that the present invention be limited by the following claims.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

For instance, the annular ends 1a, 1b used for the container bodies 1, 2 are not necessarily interior flanges 11, 12 and/or not necessarily provided with circular edges. Other shapes, including straight edge portions may be used. Besides, the side wall of each container body does not necessarily always extend regularly around a longitudinal axis A, here illustrated as a symmetry axis. Of course, the container body side wall may also be provided with a longitudinal irregular profile and/or significant curves, possibly with at least one oblique gripping part or oblique shoulder.

## Claims

1. A container (10) for keeping contents in separate compartments (C1, C2) before use, the container (10) comprising:
- a first container body (1) providing a first compartment (C1) for containing a first content (21), the first container body (1) having an end (E1) and a first outer side wall (10a) extending around the first compartment (C1);
- a second container body (2) separate from the first container body (1), the second container body providing a second compartment (C2) for containing a second content (22), the second container body (2) having a second outer side wall (10b) extending around the second compartment (C2), and an end (E2) opposite to the end (E1) of the first container body;
- an interface device (3), separate from the first container body (1) and separate from the second container body (2), for connecting the first container body (1) to the second container body (2);
- an internal passage (4), allowing communication between the first compartment (C1) and the second compartment (C2);
- a closure member (5) sealing the internal passage (4), the closure member (5) comprising an intercompartment membrane (5a) separating the first compartment (C1) from the second compartment (C2);
wherein the interface device (3) comprises a first connector (31) and a second connector (32) each of annular shape and engaged with each other to provide a connection between the first compartment (C1) and the second compartment (C2),
wherein the first connector (31) comprises a ring part (33) fastened to an annular end (1a) of the first container body (1), the second connector (32) being fastened to an annular end (2a) of the second container body (2) and being provided with opening means (6),
and wherein the opening means (6) of the second connector (32) is movable relative to the first connector (31), so as to move between a position distal from the internal passage (4) sealed by the closure member (5) and an activated position to open the internal passage (4) by opening the intercompartment membrane (5a), allowing mixing between the first content (21) and the second content (22), **characterised in that** the second connector (32) comprises a retaining element, the first connector (31) being provided with a detent element (31 b) configured to engage with the retaining element so as to prevent the second connector (32) from being detached from the first connector (31).

2. The container according to claim 1, wherein the opening means is a puncturing structure (6), and wherein opening the intercompartment membrane (5a) is done by puncturing the intercompartment membrane (5a), and wherein the closure member (5) is sealing the first container body (1) so that the first container body (1) is closed before being fastened to the first connector (31).

3. The container according to claim 1 or 2, wherein the annular end (1a) of the first container body (1) is in contact with a first sealing element, which is separate from the first connector (31) and in annular contact with the ring part (33), the first sealing element providing:
- a rigid connection between the first container body (1) and the first connector (31), so that the first connector (31) is tightly fastened to the annular end (1a) of the first container body (1);
- an annular sealing contact between the first connector (31) and the first container body (1).

4. The container according to claim 3, wherein the first sealing element is an annular part of the closure member (5).

5. The container according to any one of claims 3 or 4, wherein the first sealing element comprises an electrically conducting layer, preferably a layer containing aluminum, adjacent to an annular contact area for contact between the first sealing element and the first connector (31) of the interface device (3), the first connector (31) being induction sealed to the first container body (1) at said annular contact area.

6. The container according to any one of claims 3 to 5, wherein the annular end (2a) of the second container body (2) is in contact with a second sealing element (16), which is separate from the second connector (32) and in annular contact with the second connector (32), the second sealing element (16) providing:
- a rigid connection between the second container body (2) and the second connector (32) so that the second connector (32) is tightly fastened to the annular end (2a) of the second container body (2);
- an annular sealing contact between the second connector (32) and the second container body (2).

7. The container according to claim 6, wherein the second sealing element (16) extends annularly around a sub-area of the second compartment (C2) and is received in an annular inner groove (G2) of the second connector (32).

8. The container according to claim 6 or 7, wherein the second sealing element (16) comprises an electrically conducting layer, preferably a layer containing aluminum, adjacent to a determined annular contact area for contact between the second sealing element (16) and the second connector (32) of the interface device (3), the second connector (32) being induction sealed to the second container body (2) at the determined annular contact area.

9. The container according to any one of the preceding claims, wherein the first connector (31) and the second connector (32) of the interface device (3) each form a single plastic piece, the first container body (1) and the second container body (2) being two pieces separated by the interface device (3) and the intercompartment membrane (5a),
and wherein the closure member (5) is a flexible closure membrane forming the intercompartment membrane (5a) that extends between the first container body (1) and the interface device (3).

10. The container according to claim 9, wherein the first connector (31) and the second connector (32) of the interface device (3) are each made of thermoplastic material,
wherein the first container body (1) and the second container body (2) are each made of thermoplastic,
and wherein the container (10) further comprises:
- a first sealing element interconnecting in fluid tight manner the ring part (33) and the first container body (1), the first sealing element comprising an electrically conducting mineral layer, preferably an aluminum foil, to form a non-rotatable induction sealing contact between the first connector (31) and the first container body (1) with respect to each other;
- a second sealing element (16) interconnecting in fluid tight manner the fitment part (36) and the second container body (2), the second sealing element (16) comprising an electrically conducting mineral layer, preferably an aluminum foil, to form a non-rotatable induction sealing contact between the second connector (32) and the second container body (2) with respect to each other.

11. The container according to any one of the preceding claims, wherein the second connector (32) is a male connector provided with an inserting part (32i) of tubular shape that is:
- fitted in the first connector (31) that is a female connector,
- in annular sealing contact with an inner face (F1) of the first connector (31) in a circumferential contact area (CC), and
- provided with guide elements (32b) formed on an outer face (F2) of the inserting part (32i), preferably at least two spaced guide elements,
wherein said guide elements (32b) cooperate with coupling means formed on the inner face (F1) of the first connector (31).

12. The container according to any one of the preceding claims, wherein the interface device (3) comprises:
- at least one guide element (32b) formed on the second connector (32); and
- an inner face (F1) of the first connector (31), provided with at least one helical cam engaging with the at least one guide element (32b) so that the second connector (32) is movable in translation combined with rotation.

13. The container according to any one of the preceding claims, wherein the mutually facing annular ends (1a, 2a) of the container bodies (1, 2) are threadless.

14. The container according to any one of the preceding claims, wherein the interface device (3) comprises a locking element (K2) distinct from the retaining element and from the detent element (31b) and which is capable of engaging with one among said retaining element and said detent element so as to rotationally lock said activated position.

15. The container according to any one of claims 1-14, wherein the first connector (31) comprises:
- an annular bearing portion (34), axially protruding toward the second container body (2) from an annular radial portion of the ring part, the annular bearing portion (34) comprising an inner guiding face (F1) for guiding movement of the second connector (32);
- an annular inner groove (G1) for receiving an annular margin portion of the closure member (5) and the annular end (1a) of the first container body (1), at the opposite from the annular bearing portion (34).
wherein the second connector (32) is in radial annular contact with the inner guiding face (F1), using at least a circumferential flexible lip (30, 40) included in the interface device (3).

16. The container according to any one of claims 1-14, wherein the first connector (31) comprises:
- an inner guiding face (F1) for guiding movement of the second connector (32); and
- an annular lip (30) configured to interact with a free end of the second connector (32), preferably by a radial annular contact, so as to ensure air tightness between the first compartment (C1) and the inner guiding face (F1), after the intercompartment membrane (5a) is open.

17. A method to produce the container (10) according to claim 1, comprising:
- fastening the first container body (1) to one of two opposite axial ends (3a, 3b) of the interface device (3), preferably by induction sealing using a first metal medium included in or adjacent to a first fastening junction (J1) between the first connector (31) and the first container body (1);
- filling the first container body (1) with the first content (21), in order to store the first content in the first compartment (C1);
- fastening the second container body (2) to the other one of two opposite axial ends (3a, 3b) of the interface device (3), preferably by induction sealing using a second metal medium included in or adjacent to a second fastening junction (J2) between the second connector (32) and the second container body (32);
- filling the second container body (2) with the second content (22), in order to store the second content in the second compartment (C2) separately from the first content thanks to an intercompartment membrane (5a) included in a closure member (5) that is attached to one amongst the first connector (31) and the second connector (32), the closure member (5) sealing the internal passage (4) provided for communication between the first compartment (C1) and the second compartment (C2);
- closing the container (10) to seal an opening (O1) forming an outlet for one amongst the first compartment (C1) and the second compartment (C2);
wherein the first connector (31) and the second connector (32) provided with the opening means (6) are connected and coupled in a first configuration, in which:
- a circumferential contact area (CC) extends continuously between the first connector (31) and the second connector (32), and
- the opening means (6) is distal from the internal passage (4) sealed by the closure member (5),
and wherein the second connector (32) is engaged with coupling means of the second connector (32) permitting a relative movement of the second connector (32) relative to the first connector (31) from the first configuration to a second configuration, in which the opening means (6) opens the internal passage (4) by puncturing and/or displacing the intercompartment membrane (5a), the second connector (32) being prevented from being detached from the first connector (31) due to engagement between a retaining element provided in the second connector and a detent element (31b) provided in the first connector (31).

18. The method according to claim 17, wherein induction sealing is performed to airtightly fasten at least one amongst the first container body (1) and the second container body (2) to the interface device (3), using at least one annular induction sealing head through which all or part of the container (10) is passed, so that at least one induction seal gasket including a metal medium is activated.

19. The method according to claim 17 or 18, comprising the following steps:
- forming, by blowing plastic material, a pre-container (44) extending along a central axis (Y) and having a circumferential groove (CG) perpendicular to the central axis (Y),
- cutting the pre-container (44) so that an opened pre-container top section forms all or part of the first container body (1) that is provided with a top opening (O1) and a pre-container lower section forms the second container body (2), the cutting being performed transversally to the central axis (Y), at said circumferential groove (CG), so as to form an open end (14) of the first container body (1) and an open end (18) of the second container body (2) that are distinct from the top opening (O1), each open end being delimited by an annular inner rim of a flange (11, 12).

## Patentansprüche

1. Behälter (10) zum Halten von Inhalten in separaten Kammern (C1, C2) vor einer Verwendung, wobei der Behälter (10) umfasst:
- einen ersten Behälterkörper (1), welcher eine erste Kammer (C1) zum Enthalten eines ersten Inhalts (21) bereitstellt, wobei der erste Behälterkörper (1) ein Ende (E1) und eine erste äußere Seitenwand (10a) aufweist, welche sich um die erste Kammer (C1) herum erstreckt;
- einen von dem ersten Behälterkörper (1) separaten zweiten Behälterkörper (2), wobei der zweite Behälterkörper (2) eine zweite Kammer (C2) zum Enthalten eines zweiten Inhalts (22) bereitstellt, wobei der zweite Behälterkörper (2) eine zweite äußere Seitenwand (10b), welche sich um die zweite Kammer (C2) herum erstreckt, und ein dem Ende (E1) des ersten Behälterkörpers entgegengesetztes Ende (E2) aufweist;
- eine von dem ersten Behälterkörper (1) separate und von dem zweiten Behälterkörper (2) separate Schnittstellenvorrichtung (3) zum Verbinden des ersten Behälterkörpers (1) mit dem zweiten Behälterkörper (2);
- einen internen Durchgang (4), welcher eine Kommunikation zwischen der ersten Kammer (C1) und der zweiten Kammer (C2) ermöglicht;
- ein Verschlusselement (5), welches den internen Durchgang (4) abdichtet, wobei das Verschlusselement (5) eine Zwischenkammermembran (5a) umfasst, welche die erste Kammer (C1) von der zweiten Kammer (C2) separiert;
wobei die Schnittstellenvorrichtung (3) einen ersten Verbinder (31) und einen zweiten Verbinder (32) umfasst, welche jeweils eine ringförmige Form aufweisen und miteinander in Eingriff gebracht sind, um eine Verbindung zwischen der ersten Kammer (C1) und der zweiten Kammer (C2) bereitzustellen,
wobei der erste Verbinder (31) einen Ringteil (33) umfasst, welcher an einem ringförmigen Ende (1a) des ersten Behälterkörpers (1) befestigt ist, wobei der zweite Verbinder (32) an einem ringförmigen Ende (2a) des zweiten Behälterkörpers (2) befestigt ist und mit einem Öffnungsmittel (6) bereitgestellt ist,
und wobei das Öffnungsmittel (6) des zweiten Verbinders (32) relativ zu dem ersten Verbinder (31) derart beweglich ist, dass es sich zwischen einer Position distal von dem internen Durchgang (4), welcher durch das Verschlusselement (5) abgedichtet ist, und einer aktivierten Position bewegt, um den internen Durchgang (4) zu öffnen, indem die Zwischenkammermembran (5a) geöffnet wird, wodurch ein Mischen zwischen dem ersten Inhalt (21) und dem zweiten Inhalt (22) ermöglicht wird,
**dadurch gekennzeichnet, dass** der zweite Verbinder (32) ein Halteelement umfasst, wobei der erste Verbinder (31) mit einem Rastelement (31b) bereitgestellt ist, welches dazu eingerichtet ist, mit dem Halteelement in Eingriff zu treten, um zu verhindern, dass der zweite Verbinder (32) von dem ersten Verbinder (31) gelöst wird.

2. Behälter nach Anspruch 1, wobei das Öffnungsmittel eine Punktierungsstruktur (6) ist und wobei ein Öffnen der Zwischenkammermembran (5a) durch ein Punktieren der Zwischenkammermembran (5a) erfolgt und wobei das Verschlusselement (5a) den ersten Behälterkörper (1) derart abdichtet, dass der erste Behälterkörper (1) geschlossen ist, bevor an dem ersten Verbinder (31) befestigt wird.

3. Behälter nach Anspruch 1 oder 2, wobei das ringförmige Ende (1a) des ersten Behälterkörpers (1) in Kontakt mit einem ersten Dichtelement ist, welches separat von dem ersten Verbinder (31) und in einem ringförmigen Kontakt mit dem Ringteil (33) vorliegt, wobei das erste Dichtelement bereitstellt:
- eine starre Verbindung zwischen dem ersten Behälterkörper (1) und dem ersten Verbinder (31), so dass der erste Verbinder (31) fest an dem ringförmigen Ende (1a) des ersten Behälterkörpers (1) befestigt ist;
- einen ringförmigen Dichtkontakt zwischen dem ersten Verbinder (31) und dem ersten Behälterkörper (1).

4. Behälter nach Anspruch 3, wobei das erste Dichtelement ein ringförmiger Teil des Verschlusselements (5) ist.

5. Behälter nach einem der Ansprüche 3 oder 4, wobei das erste Dichtelement eine elektrisch leitende Schicht, vorzugsweise eine Schicht, welche Aluminium enthält, benachbart zu einem ringförmigen Kontaktbereich für einen Kontakt zwischen dem ersten Dichtelement und dem ersten Verbinder (31) der Schnittstellenvorrichtung (3) umfasst, wobei der erste Verbinder (31) an dem ringförmigen Kontaktbereich induktiv mit dem ersten Behälterkörper (1) versiegelt ist.

6. Behälter nach einem der Ansprüche 3 bis 5, wobei das ringförmige Ende (2a) des zweiten Behälterkörpers (2) in Kontakt mit einem zweiten Dichtelement (16) ist, welches separat von dem zweiten Verbinder (32) und in einem ringförmigen Kontakt mit dem zweiten Verbinder (32) vorliegt, wobei das zweite Dichtelement (16) bereitstellt:
- eine starre Verbindung zwischen dem zweiten Behälterkörper (2) und dem zweiten Verbinder (32), so dass der zweite Verbinder (32) fest an dem ringförmigen Ende (2a) des zweiten Behälterkörpers (2) befestigt ist;
- einen ringförmigen Dichtkontakt zwischen dem zweiten Verbinder (32) und dem zweiten Behälterkörper (2).

7. Behälter nach Anspruch 6, wobei sich das zweite Dichtelement (16) ringförmig um einen Unterbereich der zweiten Kammer (C2) herum erstreckt und in einer ringförmigen inneren Nut (G2) des zweiten Verbinders (32) aufgenommen ist.

8. Behälter nach Anspruch 6 oder 7, wobei das zweite Dichtelement (16) eine elektrisch leitende Schicht, vorzugsweise eine Schicht, welche Aluminium enthält, benachbart zu einem bestimmten ringförmigen Kontaktbereich für einen Kontakt zwischen dem zweiten Dichtelement (16) und dem zweiten Verbinder (32) der Schnittstellenvorrichtung (3) umfasst, wobei der zweite Verbinder (32) an dem bestimmten ringförmigen Kontaktbereich induktiv mit dem zweiten Behälterkörper (2) versiegelt ist.

9. Behälter nach einem der vorhergehenden Ansprüche, wobei der erste Verbinder (31) und der zweite Verbinder (32) der Schnittstellenvorrichtung (3) jeweils ein einzelnes Kunststoffteil bilden, wobei der erste Behälterkörper (1) und der zweite Behälterkörper (2) zwei Teile sind, welche durch die Schnittstellenvorrichtung (3) und die Zwischenkammermembran (5a) separiert sind,
und wobei das Verschlusselement (5) eine flexibel Verschlussmembran ist, welche die Zwischenkammermembran (5a) bildet, die sich zwischen dem ersten Behälterkörper (1) und der Schnittstellenvorrichtung (3) erstreckt.

10. Behälter nach Anspruch 9, wobei der erste Verbinder (31) und der zweite Verbinder (32) der Schnittstellenvorrichtung (3) jeweils aus einem thermoplastischen Material hergestellt sind,
wobei der erste Behälterkörper (1) und der zweite Behälterkörper (2) jeweils aus einem Thermoplast hergestellt sind
und wobei der Behälter (10) ferner umfasst:
- ein erstes Dichtelement, welches den Ringteil (33) und den ersten Behälterkörper (1) in einer fluiddichten Weise miteinander verbindet, wobei das erste Dichtelement eine elektrisch leitende mineralische Schicht, vorzugsweise eine Aluminiumfolie, umfasst, um einen nicht drehbaren induktiv versiegelten Kontakt zwischen dem ersten Verbinder (31) und dem ersten Behälterkörper (1) in Bezug aufeinander zu bilden;
- ein zweites Dichtelement (16), welches den Passteil (36) und den zweiten Behälterkörper (2) in einer fluiddichten Weise miteinander verbindet, wobei das zweite Dichtelement (16) eine elektrisch leitende mineralische Schicht, vorzugsweise eine Aluminiumfolie, umfasst, um einen nicht drehbaren induktiv versiegelten Kontakt zwischen dem zweiten Verbinder (32) und dem zweiten Behälterkörper (2) in Bezug aufeinander zu bilden.

11. Behälter nach einem der vorhergehenden Ansprüche, wobei der zweite Verbinder (32) ein männlicher Verbinder ist, welcher mit einem Einsatzteil (32i) einer rohrförmigen Form bereitgestellt ist, welcher:
- in den ersten Verbinder (31) eingepasst ist, welcher ein weiblicher Verbinder ist,
- in einem umlaufenden Kontaktbereich (CC) in einem ringförmigen Dichtkontakt mit einer inneren Fläche (F1) des ersten Verbinders (31) ist und
- mit Führungselementen (32b), vorzugsweise wenigstens zwei beabstandeten Führungselementen, bereitgestellt ist, welche an einer äußeren Fläche (F2) des Einsatzteils (32i) gebildet sind,
wobei die Führungselemente (32b) mit einem Kopplungsmittel zusammenwirken, welches an der inneren Fläche (F1) des ersten Verbinders (31) gebildet ist.

12. Behälter nach einem der vorhergehenden Ansprüche, wobei die Schnittstellenvorrichtung (3) umfasst:
- wenigstens ein Führungselement (32b), welches an dem zweiten Verbinder (32) gebildet ist; und
- eine innere Fläche (F1) des ersten Verbinders (31), welche mit wenigstens einem Schneckennocken bereitgestellt ist, welcher derart mit dem wenigstens einen Führungselement (32b) in Eingriff tritt, dass der zweite Verbinder (32) in einer Translation kombiniert mit einer Rotation beweglich ist.

13. Behälter nach einem der vorhergehenden Ansprüche, wobei die einander zugewandten ringförmigen Enden (1a, 2a) der Behälterkörper (1, 2) gewindelos sind.

14. Behälter nach einem der vorhergehenden Ansprüche, wobei die Schnittstellenvorrichtung (3) ein Verriegelungselement (K2) umfasst, welches von dem Halteelement und von dem Rastelement (31b) verschieden ist und welches dazu in der Lage ist, mit einem aus dem Halteelement und dem Rastelement in Eingriff zu treten, um die aktivierte Position drehfest zu verriegeln.

15. Behälter nach einem der Ansprüche 1-14, wobei der erste Verbinder (31) umfasst:
- einen ringförmigen Lagerabschnitt (34), welcher von einem ringförmigen radialen Abschnitt des Ringteils axial in Richtung des zweiten Behälterkörpers (2) vorsteht, wobei der ringförmige Lagerabschnitt (34) eine innere Führungsfläche (F1) zum Führen einer Bewegung des zweiten Verbinders (32) umfasst;
- eine ringförmige innere Nut (G1) zum Aufnehmen eines ringförmigen Randabschnitts des Verschlusselements (5) und des ringförmigen Endes (1a) des ersten Behälterkörpers (1) an der Gegenseite von dem ringförmigen Lagerabschnitt (34), wobei der zweite Verbinder (32) unter Verwendung wenigstens einer umlaufenden flexiblen Lippe (30, 40) , welche in der Schnittstellenvorrichtung (3) umfasst ist, in einem radialen ringförmigen Kontakt mit der inneren Führungsfläche (F1) vorliegt.

16. Behälter nach einem der Ansprüche 1-14, wobei der erste Verbinder (31) umfasst:
- eine innere Führungsfläche (F1) zum Führen einer Bewegung des zweiten Verbinders (32); und
- eine ringförmige Lippe (30), welche dazu eingerichtet ist, mit einem freien Ende des zweiten Verbinders (32), vorzugsweise durch einen radialen ringförmigen Kontakt, zusammenzuwirken, um eine Luftdichtigkeit zwischen der ersten Kammer (C1) und der inneren Führungsfläche (F1) sicherzustellen, nachdem die Zwischenkammermembran (5a) geöffnet worden ist.

17. Verfahren zur Herstellung des Behälters (10) nach Anspruch 1, umfassend:
- Befestigen des ersten Behälterkörpers (1) an einem von zwei entgegengesetzten axialen Enden (3a, 3b) der Schnittstellenvorrichtung (3), vorzugsweise durch ein induktives Versiegeln unter Verwendung eines ersten Metallmediums, welches in einer ersten Befestigungsverbindung (J1) zwischen dem ersten Verbinder (31) und dem ersten Behälterkörper (1) umfasst oder dazu benachbart ist;
- Füllen des ersten Behälterkörpers (1) mit dem ersten Inhalt (21), um den ersten Inhalt in der ersten Kammer (C1) aufzubewahren;
- Befestigen des zweiten Behälterkörpers (2) an dem anderen von zwei entgegengesetzten axialen Enden (3a, 3b) der Schnittstellenvorrichtung (3), vorzugsweise durch ein induktives Versiegeln unter Verwendung eines zweiten Metallmediums, welches in einer zweiten Befestigungsverbindung (J2) zwischen dem zweiten Verbinder (32) und dem zweiten Behälterkörper (32) umfasst oder dazu benachbart ist;
- Füllen des zweiten Behälterkörpers (2) mit dem zweiten Inhalt (22), um den zweiten Inhalt separat von dem ersten Inhalt in der zweiten Kammer (C2) aufzubewahren, dank einer Zwischenkammermembran (5a), welche in einem Verschlusselement (5) umfasst ist, welches an einem aus dem ersten Verbinder (31) und dem zweiten Verbinder (32) angebracht ist, wobei das Verschlusselement (5) den internen Durchgang (4) abdichtet, welcher für eine Kommunikation zwischen der ersten Kammer (C1) und der zweiten Kammer (C2) bereitgestellt ist;
- Verschließen des Behälters (10) um eine Öffnung (O1) abzudichten, welche einen Auslass für eines aus der ersten Kammer (C1) und der zweiten Kammer (C2) bildet; wobei der erste Verbinder (31) und der zweite Verbinder (32), welcher mit dem Öffnungsmittel (6) bereitgestellt ist, in einer ersten Konfiguration verbunden und gekoppelt sind, in welcher:
- sich ein umlaufender Kontaktbereich (CC) kontinuierlich zwischen dem ersten Verbinder (31) und dem zweiten Verbinder (32) erstreckt und
- das Öffnungsmittel (6) distal von dem internen Durchgang (4) vorliegt, welcher durch das Verschlusselement (5) abgedichtet ist,
und wobei der zweite Verbinder (32) mit einem Kopplungsmittel des zweiten Verbinders (32) in Eingriff gebracht ist, welches eine relative Bewegung des zweiten Verbinders (32) relativ zu dem ersten Verbinder (31) von der ersten Konfiguration zu einer zweiten Konfiguration zulässt, in welcher das Öffnungsmittel (6) den internen Durchgang (4) öffnet, indem die Zwischenkammermembran (5a) punktiert und/oder verlagert wird, wobei aufgrund eines Eingriffs zwischen einem Halteelement, welches in dem zweiten Verbinder bereitgestellt ist, und einem Rastelement (31b), welches in dem ersten Verbinder (31) bereitgestellt ist, verhindert wird, dass der zweite Verbinder (32) von dem ersten Verbinder (31) gelöst wird.

18. Verfahren nach Anspruch 17, wobei ein induktives Versiegeln durchgeführt wird, um unter Verwendung wenigstens eines ringförmigen Induktionsversiegelungskopfs, durch welchen alles oder ein Teil des Behälters (10) geführt wird, wenigstens eines aus dem ersten Behälterkörper (1) und dem zweiten Behälterkörper (2) luftdicht an der Schnittstellenvorrichtung (3) zu befestigen, so dass wenigstens eine Induktionsversiegelungsdichtung aktiviert wird, welche ein Metallmedium umfasst.

19. Verfahren nach Anspruch 17 oder 18, umfassend die folgenden Schritte:
- Bilden, durch Blasen eines Kunststoffmaterials, eines Vorbehälters (44), welcher sich entlang einer Mittelachse (Y) erstreckt und eine zu der Mittelachse (Y) senkrechte umlaufende Nut (CG) aufweist,
- Schneiden des Vorbehälters (44), so dass ein geöffneter oberer Abschnitt des Vorbehälters alles oder einen Teil des ersten Behälterkörpers (1) bildet, welcher mit einer oberen Öffnung (O1) bereitgestellt ist, und ein unterer Abschnitt des Vorbehälters den zweiten Behälterkörper (2) bildet, wobei das Schneiden an der umlaufenden Nut (CG) transversal zu der Mittelachse (Y) durchgeführt wird, um ein offenes Ende (14) des ersten Behälterkörpers (1) und ein offenes Ende (18) des zweiten Behälterkörpers (2) zu bilden, welche von der oberen Öffnung (O1) verschieden sind, wobei jedes offene Ende durch einen ringförmigen inneren Rand eines Flanschs (11, 12) begrenzt ist.

## Revendications

1. Récipient (10) pour maintenir des contenus dans des compartiments séparés (C1, C2) avant utilisation, le récipient (10) comprenant :
- un premier corps de récipient (1) fournissant un premier compartiment (C1) pour contenir un premier contenu (21), le premier corps de récipient (1) présentant une extrémité (E1) et une première paroi latérale extérieure (10a) s'étendant autour du premier compartiment (C1) ;
- un second corps de récipient (2) séparé du premier corps de récipient (1), le second corps de récipient fournissant un second compartiment (C2) pour contenir un second contenu (22), le second corps de récipient (2) présentant une seconde paroi latérale extérieure (10b) s'étendant autour du second compartiment (C2), et une extrémité (E2) opposée à l'extrémité (E1) du premier corps de récipient ;
- un dispositif d'interface (3), séparé du premier corps de récipient (1) et séparé du second corps de récipient (2), pour la liaison du premier corps de récipient (1) avec le second corps de récipient (2) ;
- un passage interne (4), permettant la communication entre le premier compartiment (C1) et le second compartiment (C2) ;
- un élément de fermeture (5) scellant le passage interne (4), l'élément de fermeture (5) comprenant une membrane intercompartiment (5a) séparant le premier compartiment (C1) du second compartiment (C2) ;
dans lequel le dispositif d'interface (3) comprend un premier connecteur (31) et un second connecteur (32) chacun de forme annulaire et engagés l'un avec l'autre pour fournir une liaison entre le premier compartiment (C1) et le second compartiment (C2),
dans lequel le premier connecteur (31) comprend une partie annulaire (33) fixée à une extrémité annulaire (1a) du premier corps de récipient (1), le second connecteur (32) étant fixé à une extrémité annulaire (2a) du second corps de récipient (2) et étant doté d'un moyen d'ouverture (6),
et dans lequel le moyen d'ouverture (6) du second connecteur (32) est mobile par rapport au premier connecteur (31) de sorte à se déplacer entre une position distale du passage interne (4) scellé par l'élément de fermeture (5) et une position activée pour ouvrir le passage interne (4) par ouverture de la membrane intercompartiment (5a), permettant le mélange entre le premier contenu (21) et le second contenu (22), **caractérisé en ce que** le second connecteur (32) comprend un élément de retenue, le premier connecteur (31) étant doté d'un élément d'encliquetage (31b) configuré pour s'engager avec l'élément de retenue de sorte à empêcher le second connecteur (32) d'être détaché du premier connecteur (31).

2. Récipient selon la revendication 1, dans lequel le moyen d'ouverture est une structure de perforation (6), et dans lequel l'ouverture de la membrane intercompartiment (5a) est effectuée par perforation de la membrane intercompartiment (5a), et dans lequel l'élément de fermeture (5) scelle le premier corps de récipient (1) de sorte que le premier corps de récipient (1) est fermé avant d'être fixé au premier connecteur (31).

3. Récipient selon la revendication 1 ou 2, dans lequel l'extrémité annulaire (1a) du premier corps de récipient (1) est en contact avec un premier élément d'étanchéité qui est séparé du premier connecteur (31) et en contact annulaire avec la partie annulaire (33), le premier élément d'étanchéité fournissant :
- une liaison rigide entre le premier corps de récipient (1) et le premier connecteur (31) de sorte que le premier connecteur (31) est étroitement fixé à l'extrémité annulaire (1a) du premier corps de récipient (1) ;
- un contact étanche annulaire entre le premier connecteur (31) et le premier corps de récipient (1).

4. Récipient selon la revendication 3, dans lequel le premier élément d'étanchéité est une partie annulaire de l'élément de fermeture (5).

5. Récipient selon l'une quelconque des revendications 3 ou 4, dans lequel le premier élément d'étanchéité comprend une couche électroconductrice, de préférence une couche contenant de l'aluminium, adjacente à une zone de contact annulaire pour le contact entre le premier élément d'étanchéité et le premier connecteur (31) du dispositif d'interface (3), le premier connecteur (31) étant scellé par induction au premier corps de récipient (1) au niveau de ladite zone de contact annulaire.

6. Récipient selon l'une quelconque des revendications 3 à 5, dans lequel l'extrémité annulaire (2a) du second corps de récipient (2) est en contact avec un second élément d'étanchéité (16) qui est séparé du second connecteur (32) et en contact annulaire avec le second connecteur (32), le second élément d'étanchéité (16) fournissant :
- une liaison rigide entre le second corps de récipient (2) et le second connecteur (32) de sorte que le second connecteur (32) soit étroitement fixé à l'extrémité annulaire (2a) du second corps de récipient (2) ;
- un contact étanche annulaire entre le second connecteur (32) et le second corps de récipient (2).

7. Récipient selon la revendication 6, dans lequel le second élément d'étanchéité (16) s'étend en anneau autour d'une sous-zone du second compartiment (C2) et est reçu dans une rainure intérieure annulaire (G2) du second connecteur (32).

8. Récipient selon la revendication 6 ou 7, dans lequel le second élément d'étanchéité (16) comprend une couche électroconductrice, de préférence une couche contenant de l'aluminium, adjacente à une zone de contact annulaire déterminée pour le contact entre le second élément d'étanchéité (16) et le second connecteur (32) du dispositif d'interface (3), le second connecteur (32) étant scellé par induction au second corps de récipient (2) au niveau de la zone de contact annulaire déterminée.

9. Récipient selon l'une quelconque des revendications précédentes, dans lequel le premier connecteur (31) et le second connecteur (32) du dispositif d'interface (3) forment chacun une seule pièce en plastique, le premier corps de récipient (1) et le second corps de récipient (2) étant deux pièces séparées par le dispositif d'interface (3) et la membrane intercompartiment (5a),
et dans lequel l'élément de fermeture (5) est une membrane de fermeture souple formant la membrane intercompartiment (5a) qui s'étend entre le premier corps de récipient (1) et le dispositif d'interface (3).

10. Récipient selon la revendication 9, dans lequel le premier connecteur (31) et le second connecteur (32) du dispositif d'interface (3) sont chacun réalisés en matière thermoplastique,
dans lequel le premier corps de récipient (1) et le second corps de récipient (2) sont chacun réalisés en thermoplastique,
et dans lequel le récipient (10) comprend en outre :
- un premier élément d'étanchéité reliant de manière étanche au fluide la partie annulaire (33) et le premier corps de récipient (1), le premier élément d'étanchéité comprenant une couche minérale électroconductrice, de préférence un film d'aluminium, pour former un contact de scellement par induction non rotatif entre le premier connecteur (31) et le premier corps de récipient (1) l'un par rapport à l'autre ;
- un second élément d'étanchéité (16) reliant de manière étanche au fluide la partie de montage (36) et le second corps de récipient (2), le second élément d'étanchéité (16) comprenant une couche minérale électroconductrice, de préférence un film d'aluminium, pour former un contact de scellement par induction non rotatif entre le second connecteur (32) et le second corps de récipient (2) l'un par rapport à l'autre.

11. Récipient selon l'une quelconque des revendications précédentes, dans lequel le second connecteur (32) est un connecteur mâle doté d'une partie d'insertion (32i) de forme tubulaire qui est :
- inséré dans le premier connecteur (31) qui est un connecteur femelle,
- en contact d'étanchéité annulaire avec une face intérieure (F1) du premier connecteur (31) dans une zone de contact circonférentielle (CC), et
- doté d'éléments de guidage (32b) formés sur une face extérieure (F2) de la partie d'insertion (32i), de préférence au moins deux éléments de guidage espacés,
dans lequel lesdits éléments de guidage (32b) coopèrent avec des moyens de couplage formés sur la face intérieure (F1) du premier connecteur (31).

12. Récipient selon l'une quelconque des revendications précédentes, dans lequel le dispositif d'interface (3) comprend :
- au moins un élément de guidage (32b) formé sur le second connecteur (32) ; et
- une face intérieure (F1) du premier connecteur (31), dotée d'au moins une came hélicoïdale s'engageant avec l'au moins un élément de guidage (32b) de sorte que le second connecteur (32) soit mobile en translation combinée avec la rotation.

13. Récipient selon l'une quelconque des revendications précédentes, dans lequel les extrémités annulaires se faisant face mutuellement (1a, 2a) des corps de récipient (1, 2) sont sans filetage.

14. Récipient selon l'une quelconque des revendications précédentes, dans lequel le dispositif d'interface (3) comprend un élément de verrouillage (K2) distinct de l'élément de retenue et de l'élément de détente (31b) et qui est capable d'engagement avec un parmi ledit élément de retenue et ledit élément de détente de sorte à verrouiller en rotation ladite position activée.

15. Récipient selon l'une quelconque des revendications 1 à 14, dans lequel le premier connecteur (31) comprend :
- une partie porteuse annulaire (34), faisant saillie axialement vers le second corps de récipient (2) d'une partie radiale annulaire de la partie annulaire, la partie porteuse annulaire (34) comprenant une face de guidage intérieure (F1) pour le guidage du mouvement du second connecteur (32) ;
- une rainure intérieure annulaire (G1) pour la réception d'une partie de marge annulaire de l'élément de fermeture (5) et de l'extrémité annulaire (1a) du premier corps de récipient (1), à l'opposé de la partie porteuse annulaire (34),
dans lequel le second connecteur (32) est en contact annulaire radial avec la face de guidage intérieure (F1) utilisant au moins une lèvre souple circonférentielle (30, 40) incluse dans le dispositif d'interface (3).

16. Récipient selon l'une quelconque des revendications 1 à 14, dans lequel le premier connecteur (31) comprend :
- une face de guidage intérieure (F1) pour le guidage d'un mouvement du second connecteur (32) ; et
- une lèvre annulaire (30) configurée pour interagir avec une extrémité libre du second connecteur (32), de préférence par un contact annulaire radial de sorte à assurer une étanchéité à l'air entre le premier compartiment (C1) et la face de guidage intérieure (F1) après l'ouverture de la membrane d'intercompartiment (5a).

17. Procédé pour produire le récipient (10) selon la revendication 1, comprenant :
- la fixation du premier corps de récipient (1) à une des deux extrémités axiales opposées (3a, 3b) du dispositif d'interface (3), de préférence par scellement par induction en utilisant un premier moyen métallique inclus dans une première jonction de fixation (J1) entre le premier connecteur (31) et le premier corps de récipient (1) ou adjacent à celle-ci ;
- le remplissage du premier corps de récipient (1) avec l'autre premier contenu (21) afin de stocker le premier contenu dans le premier compartiment (C1) ;
- la fixation du second corps de récipient (2) à l'autre des deux extrémités axiales opposées (3a, 3b) du dispositif d'interface (3), de préférence par scellement par induction en utilisant un second moyen métallique inclus dans une seconde jonction de fixation (J2) entre le second connecteur (32) et le second corps de récipient (2) ou adjacent à celle-ci ;
- le remplissage du second corps de récipient (2) avec le second contenu (22) afin de stocker le second récipient dans le second compartiment (C2) séparément du premier contenu grâce à une membrane intercompartiment (5a) incluse dans un élément de fermeture (5) qui est attaché à un parmi le premier connecteur (31) et le second connecteur (32), l'élément de fermeture (5) scellant le passage interne (4) prévu pour la communication entre le premier compartiment (C1) et le second compartiment (C2) ;
- la fermeture du récipient (10) pour sceller une ouverture (O1) formant une sortie pour un parmi le premier compartiment (C1) et le second compartiment (C2) ;
dans lequel le premier connecteur (31) et le second connecteur (32) doté du moyen d'ouverture (6) sont reliés et couplés dans une première configuration, dans laquelle :
- une zone de contact circonférentielle (CC) s'étend en continu entre le premier connecteur (31) et le second connecteur (32), et
- le moyen d'ouverture (6) est distal du passage interne (4) scellé par l'élément de fermeture (5),
et dans lequel le second connecteur (32) est engagé avec un moyen de couplage du second connecteur (32) permettant un mouvement relatif du second connecteur (32) par rapport au premier connecteur (31) de la première configuration à une seconde configuration, dans laquelle le moyen d'ouverture (6) ouvre le passage interne (4) par perforation et/ou déplacement de la membrane intercompartiment (5a), le second connecteur (32) étant empêché d'être détaché du premier connecteur (31) en raison de l'engagement entre un élément de retenue prévu dans le second connecteur et un élément d'encliquetage (31b) prévu dans le premier connecteur (31).

18. Procédé selon la revendication 17, dans lequel le scellement par induction est réalisé pour fixer de manière étanche à l'air au moins un parmi le premier corps de récipient (1) et le second corps de récipient (2) au dispositif d'interface (3), en utilisant au moins une tête de scellement par induction annulaire, à travers laquelle tout ou une partie du récipient (10) est passée de sorte qu'au moins un joint d'étanchéité de scellement par induction incluant un fluide métallique est activé.

19. Procédé selon la revendication 17 ou 18, comprenant les étapes suivantes :
- la formation, par soufflage de matière plastique, d'un pré-récipient (44) s'étendant le long d'un axe central (Y), et présentant une rainure circonférentielle (CG) perpendiculaire à l'axe central (Y),
- la découpe du pré-récipient (44) de sorte qu'une section supérieure de pré-récipient ouverte forme tout ou une partie du premier corps de récipient (1) qui est doté d'une ouverture supérieure (O1) et une section inférieure de pré-récipient forme le second corps de récipient (2), la découpe étant réalisée transversalement à l'axe central (Y), au niveau de ladite rainure circonférentielle (CG) de sorte à former une extrémité ouverte (14) du premier corps de récipient (1) et une extrémité ouverte (18) du second corps de récipient (2) qui sont distincts de l'ouverture supérieure (O1), chaque extrémité ouverte étant délimitée par un bord intérieur annulaire d'une bride (11, 12).
